(19) Europäisches Patentamt
European Patent Office
Office européen des brevets

(11) **EP 3 021 585 A1**

(12) **EUROPEAN PATENT APPLICATION**
published in accordance with Art. 153(4) EPC

(43) Date of publication:
**18.05.2016 Bulletin 2016/20**

(51) Int Cl.:
**H04N 19/30** *(2014.01)*

(21) Application number: **14823470.1**

(86) International application number:
**PCT/JP2014/064824**

(22) Date of filing: **04.06.2014**

(87) International publication number:
**WO 2015/005025 (15.01.2015 Gazette 2015/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **12.07.2013 JP 2013146344**

(71) Applicant: **Sony Corporation Tokyo 108-0075 (JP)**

(72) Inventor: **SATO, Kazushi Tokyo 108-0075 (JP)**

(74) Representative: **Witte, Weller & Partner Patentanwälte mbB Postfach 10 54 62 70047 Stuttgart (DE)**

(54) **IMAGE PROCESSING DEVICE AND IMAGE PROCESSING METHOD**

(57)    There is provided an image processing device including a setting section configured to set a prediction parameter used when an image of a second layer with a color gamut different from a color gamut of a first layer is predicted from an image of the first layer, for each block included in the image of the second layer, a prediction section configured to generate a predicted image of the second layer from the image of the first layer using the prediction parameter set for each block by the setting section, and a decoding section configured to decode the image of the second layer using the predicted image generated by the prediction section.

**FIG.17**

# EP 3 021 585 A1

**Description**

Technical Field

The present disclosure relates to an image processing device and an image processing method.

Background Art

Joint Collaboration Team-Video Coding (JCTVC), which is a joint standardizing organization of ITU-T and ISO/IEC, is currently standardizing an image encoding scheme referred to as high efficiency video coding (HEVC) for the purpose of achieving further better encoding efficiency than that of H.264/AVC (see Non-Patent Literature 1 below).

HEVC provides not only coding of a single layer but also scalable video coding, as in known image encoding schemes such as MPEG2 and AVC (Advanced Video Coding). An HEVC scalable video coding technique is also called SHVC (Scalable HEVC) (for example, see Non-Patent Literature 2 below).

The scalable video coding (SVC) is generally represented by the technology of hierarchically encoding layers that transmit rough image signals and layers that transmit fine image signals. The typical attributes hierarchized in the scalable video coding chiefly include the following three:

- Spatial scalability: Spatial resolution or image sizes are hierarchized.
- Temporal scalability: Frame rates are hierarchized.
- Signal to noise ratio (SNR) scalability: SN ratios are hierarchized.

Further, discussion has arisen as to bit-depth scalability and chroma format scalability, which have not yet been adopted in the standard.

In Non-Patent Literature 3, color gamut scalability in which color gamuts are hierarchized is discussed. For example, in high definition (HD) televisions, an image size of 1920x1080 pixels, a color gamut of ITU-R BT.709, and a bit depth of 8 bits are generally used. On the other hand, in ultra high definition (UHD) televisions, use of an image size of 4000x2000 pixels or 8000x4000 pixels, a color gamut of ITU-R BT.2020, and a bit depth of 10 or 12 bits is being investigated. In general, for conversion of a color gamut, it is necessary to perform matrix calculation on 3-dimensional pixel vectors. However, from the viewpoint of approximating a relation between BT.709 and BT.2020 to a linear relation independent for each color component, Non-Patent Literature 3 proposes predicting a pixel value of an enhancement layer from a pixel value of a base layer by a simple method when BT.709 is used in the base layer and BT.2020 is used in the enhancement layer.

Citation List

Non-Patent Literature

Non-Patent Literature 1: "High Efficiency Video Coding (HEVC) text specification draft 10 (for FDIS & Consent)" by Benjamin Bross, Woo-Jin Han, Gary J. Sullivan, Jens-Rainer Ohm, Gary J. Sullivan, Ye-Kui Wang, and Thomas Wiegand, (JCTVC-L1003 v4, January 14 to 23, 2013)
Non-Patent Literature 2: "Description of scalable video coding technology proposal by Qualcomm (configuration 2)" by Jianle Chen, el. al, (JCTVC-K0036, October 10 to 19, 2012)
Non-Patent Literature 3: "Color Gamut Scalable Video Coding: New Results" by Louis Kerofsky, el. al, (JCTVC-L0334, January 14 to 23, 2013)

Summary of Invention

Technical Problem

In the method suggested in Non-Patent Literature 3, however, a prediction parameters of each color component in the adaptive parameter mode are encoded for each picture. Therefore, the values of the prediction parameters may not necessarily be said to be optimal in all of the regions in an image and accuracy of inter layer prediction may be low in some of the regions in some cases.

Accordingly, it is desirable to provide a structure capable of suppressing a variation in accuracy of inter layer prediction in color gamut scalability.

Solution to Problem

According to the present disclosure, there is provided an image processing device including a setting section configured to set a prediction parameter used when an image of a second layer with a color gamut different from a color gamut of a first layer is predicted from an image of the first layer, for each block included in the image of the second layer, a prediction section configured to generate a predicted image of the second layer from the image of the first layer using the prediction parameter set for each block by the setting section, and a decoding section configured to decode the image of the second layer using the predicted image generated by the prediction section.

The image processing device mentioned above may be typically realized as an image decoding device that decodes an image.

According to the present disclosure, there is provided an image processing method including setting a prediction parameter used when an image of a second layer with a color gamut different from a color gamut of a first layer is predicted from an image of the first layer, for each block included in the image of the second layer, generating a predicted image of the second layer from the image of the first layer using the prediction parameter set for each block, and decoding the image of the second layer using the generated predicted image.

According to the present disclosure, there is provided an image processing device including a setting section configured to set a prediction parameter used when an image of a second layer with a color gamut different from a color gamut of a first layer is predicted from an image of the first layer, for each block included in the image of the second layer, a prediction section configured to generate a predicted image of the second layer from the image of the first layer using the prediction parameter set for each block by the setting section, and an encoding section configured to encode the image of the second layer using the predicted image generated by the prediction section.

The image processing device mentioned above may be typically realized as an image encoding device that encodes an image.

According to the present disclosure, there is provided an image processing method including setting a prediction parameter used when an image of a second layer with a color gamut different from a color gamut of a first layer is predicted from an image of the first layer, for each block included in the image of the second layer, generating a predicted image of the second layer from the image of the first layer using the prediction parameter set for each block, and encoding the image of the second layer using the generated predicted image.

Advantageous Effects of Invention

According to the technology of the present disclosure, it is possible to suppress the variation in the accuracy of the inter layer prediction in the color gamut scalability.

Brief Description of Drawings

[FIG. 1] FIG. 1 is an explanatory diagram for describing scalable video coding.
[FIG. 2] FIG. 2 is an explanatory diagram illustrating color gamuts expressed by BT.709 and BT.2020.
[FIG. 3A] FIG. 3A is a table showing a prediction mode for color gamut prediction proposed by JCTVC-L0334.
[FIG. 3B] FIG. 3B is a first explanatory view illustrating the syntax of prediction parameters proposed by JCTVC-L0334.
[FIG. 3C] FIG. 3C is a second explanatory view illustrating the syntax of prediction parameters proposed by JCTVC-L0334.
[FIG. 4] FIG. 4 is a block diagram showing a schematic configuration of an image encoding device according to an embodiment.
[FIG. 5] FIG. 5 is a block diagram showing a schematic configuration of an image decoding device according to an embodiment.
[FIG. 6] FIG. 6 is a block diagram showing an example of the configuration of an EL encoding section illustrated in FIG. 4.
[FIG. 7] FIG. 7 is a block diagram showing an example of the configuration of a color gamut conversion section according to a first embodiment.
[FIG. 8A] FIG. 8A is an explanatory diagram illustrating a first example of parameter information which can be encoded in the first embodiment.
[FIG. 8B] FIG. 8B is an explanatory diagram illustrating a second example of parameter information which can be encoded in the first embodiment.
[FIG. 8C] FIG. 8C is an explanatory diagram illustrating a third example of parameter information which can be encoded in the first embodiment.

[FIG. 8D] FIG. 8D is an explanatory diagram illustrating a fourth example of parameter information which can be encoded in the first embodiment.

[FIG. 9] FIG. 9 is a block diagram showing an example of the configuration of a color gamut conversion section according to a second embodiment.

[FIG. 10A] FIG. 10A is a first explanatory diagram illustrating calculation of prediction parameters in the second embodiment.

[FIG. 10B] FIG. 10B is a second explanatory diagram illustrating calculation of prediction parameters in the second embodiment.

[FIG. 11] FIG. 11 is an explanatory diagram illustrating a reference pixel for calculating the prediction parameters in the second embodiment.

[FIG. 12] FIG. 12 is a flow chart showing an example of a schematic process flow for encoding according to an embodiment.

[FIG. 13] FIG. 13 is a flowchart showing a flow example of a color gamut conversion process in the coding in the first embodiment.

[FIG. 14] FIG. 14 is a flowchart showing a flow example of a parameter information generation process shown in FIG. 13.

[FIG. 15] FIG. 15 is a flowchart showing a flow example of a color gamut conversion process for the encoding in the second embodiment.

[FIG. 16] FIG. 16 is a block diagram showing an example of the configuration of an EL decoding section shown in FIG. 5.

[FIG. 17] FIG. 17 is a block diagram showing an example of the configuration of a color gamut conversion section according to the first embodiment.

[FIG. 18] FIG. 18 is a block diagram showing an example of the configuration of a color gamut conversion section according to the second embodiment.

[FIG. 19] FIG. 19 is a flowchart illustrating an example of a schematic flow of a decoding process according to an embodiment.

[FIG. 20] FIG. 20 is a flowchart showing a flow example of the color gamut conversion process for decoding according to the first embodiment.

[FIG. 21] FIG. 21 is a flowchart showing a flow example of a prediction parameter generation process shown in FIG. 20.

[FIG. 22] FIG. 22 is a flowchart illustrating a flow example of a color gamut conversion process for decoding according to the second embodiment.

[FIG. 23] FIG. 23 is a block diagram illustrating an example of a schematic configuration of a television device.

[FIG. 24] FIG. 24 is a block diagram illustrating an example of a schematic configuration of a mobile phone.

[FIG. 25] FIG. 25 is a block diagram illustrating an example of a schematic configuration of a recording/reproduction device.

[FIG. 26] FIG. 26 is a block diagram illustrating an example of a schematic configuration of an image capturing device.

[FIG. 27] FIG. 27 is an explanatory diagram illustrating a first example of use of the scalable video coding.

[FIG. 28] FIG. 28 is an explanatory diagram illustrating a second example of use of the scalable video coding.

[FIG. 29] FIG. 29 is an explanatory diagram illustrating a third example of use of the scalable video coding.

[FIG. 30] FIG. 30 is an explanatory diagram illustrating a multi-view codec.

[FIG. 31] FIG. 31 is a block diagram showing a schematic configuration of the image encoding device for multi-view codec.

[FIG. 32] FIG. 32 is a block diagram showing a schematic configuration of the image decoding device for multi-view codec.

[FIG. 33] FIG. 33 is a block diagram showing an example of the schematic configuration of a video set.

[FIG. 34] FIG. 34 is a block diagram showing an example of the schematic configuration of a video processor.

[FIG. 35] FIG. 35 is a block diagram showing another example of the schematic configuration of a video processor.

Description of Embodiments

Hereinafter, preferred embodiments of the present disclosure will be described in detail with reference to the appended drawings. Note that, in this description and the drawings, elements and structure that have substantially the same function are denoted with the same reference signs, and repeated explanation is omitted.

The description will be now made in the following order.

1. Overview

1-1. Scalable Video Coding
1-2. Color Gamut Scalability
1-3. Basic Configuration Example of Encoder
1-4. Basic Configuration Example of Decoder

2. Configuration Example of EL Encoding Section in an Embodiment

2-1. Overall Configuration
2-2. First Embodiment of Color Gamut Conversion Section
2-3. Second Embodiment of Color Gamut Conversion Section
2-4. Modification Example of Color Gamut Conversion Section

3. Flow of Encoding Process According to Embodiment

3-1. Schematic Flow
3-2. Color Gamut Conversion Process (First Embodiment)
3-3. Color Gamut Conversion Process (Second Embodiment)

4. Configuration Example of EL Decoding Section in an Embodiment

4-1. Overall Configuration
4-2. First Embodiment of Color Gamut Conversion Section
4-3. Second Embodiment of Color Gamut Conversion Section
4-4. Modification Example of Color Gamut Conversion Section

5. Flow of Process in Decoding in an Embodiment

5-1. Schematic Flow
5-2. Color Gamut Conversion Process (First Embodiment)
5-3. Color Gamut Conversion Process (Second Embodiment)

6. Applications

6-1. Application to Various Commodities
6-2. Various Uses of Scalable Video Coding
6-3. Application to Other Codecs
6-4. Various Mounting Levels

7. Conclusion

<1. Overview>

[1-1. Scalable Video Coding]

A plurality of layers each including a series of images are encoded in the scalable video coding. Base layers are the first to be encoded, and represent the roughest images. Encoded stream of base layers may be independently decoded without decoding of encoded streams of the other layers. The layers other than base layers are referred to as enhancement layers representing finer images. Encoded streams of enhancement layers are encoded using information included in encoded streams of base layers. Thus, to reproduce an image of an enhancement layer, encoded streams of both base layer and enhancement layer are decoded. Any number of layers greater than or equal to two layers may be handled in the scalable video coding. When three layers or more are encoded, the lowest layer is a base layer and the remaining layers are enhancement layers. Encoded streams of upper enhancement layers may be encoded and decoded using information included in encoded streams of the lower enhancement layers or an encoded stream of the base layer.

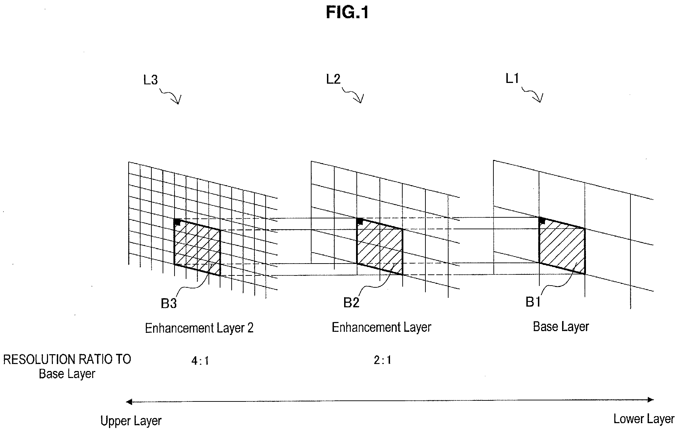

FIG. 1 illustrates three layers L1, L2, and L3 that are subjected to the scalable video coding. The layer L1 is a base layer, while the layers L2 and L3 are enhancement layers. The ratio of spatial resolution of the layer L2 to that of the layer L1 stands at 2:1. The ratio of spatial resolution of the layer L3 to that of the layer L1 stands at 4:1. These resolution ratios are merely examples. Non-integer resolution ratios such as 1.5:1 may also be used. A block B1 of the layer L1 is a processing unit for a coding process in a picture of the base layer. A block B2 of the layer L2 is a processing unit for a coding process in a picture of the enhancement layer showing a scene common to the block B1. The block B2 corresponds to the block B1 of the layer L1. A block B3 of the layer L3 is a processing unit for a coding process in a picture of the upper enhancement layer showing a scene common to the blocks B1 and B2. The block B3 corresponds to the block B1 of the layer L1 and the block B2 of the layer L2.

[1-2. Color Gamut Scalability]

In the layer structure exemplified in FIG. 1, textures of images are similar between the layers to which the common scene is projected. That is, the textures of the block B1 in the layer L1, the block B2 in the layer L2, and the block B3 in the layer L3 are similar. Accordingly, for example, when pixels of the block B2 or B3 are predicted using the block B1 as a reference block or pixels of the block B3 are predicted using the block B2 as a reference block, there is a probability of high prediction precision being obtained. Such prediction between the layers is referred to as inter layer prediction. Non-Patent Literature 2 proposes several methods for the inter layer prediction. In the methods, a decoded image (reconstructed image) of a base layer is used as a reference image to predict a decoded image of an enhancement layer in intra BL prediction. In intra residual prediction and inter residual prediction, a prediction error (residual) image of the base layer is used as a reference image to predict a prediction error image of an enhancement layer.

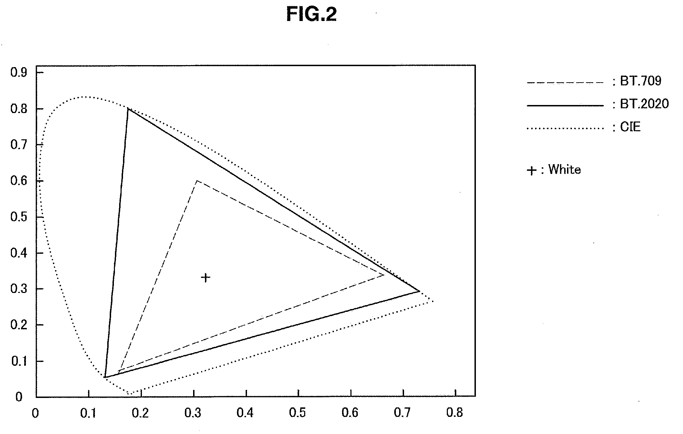

Here, for example, an image of the layer L1 is assumed to be an HD television image and an image of the layer L2 is assumed to be a UHD television image. FIG. 2 is an explanatory view illustrating color gamuts expressed by BT.709 and BT.2020. Referring to FIG. 2, a color gamut graph in which a 3-dimensional color space is mapped to a 2-dimensional plane using a predetermined restraint condition is shown. The cross mark in the graph indicates a position to which white is mapped. A dashed line in the graph indicates a color range expressed by BT.709. A solid line in the graph indicates a color range expressed by BT.2020. A dotted line in the graph indicates a color range which can be identified by human sight. As understood from FIG. 2, BT.2020 can express a greater variety of colors than BT.709. When each pixel of the layer L1 is expressed by BT.709 and each pixel of the layer L2 is expressed by BT.2020, resolution conversion (that is, up-sampling) or color gamut conversion is performed on the reference image (the image of the Layer 1) at the time of the inter layer prediction. In general, the color gamut conversion is performed by multiplying a 3-dimensional pixel vector by a conversion matrix of 3 rows and 3 columns. As described in Non-Patent Literature 3, a relation between BT.709 and BT.2020 can be approximated to a linear relation independent for each color component. Therefore, Non-Patent Literature 3 proposes a simplified method of reducing calculation complexity and time necessary for the color gamut conversion.

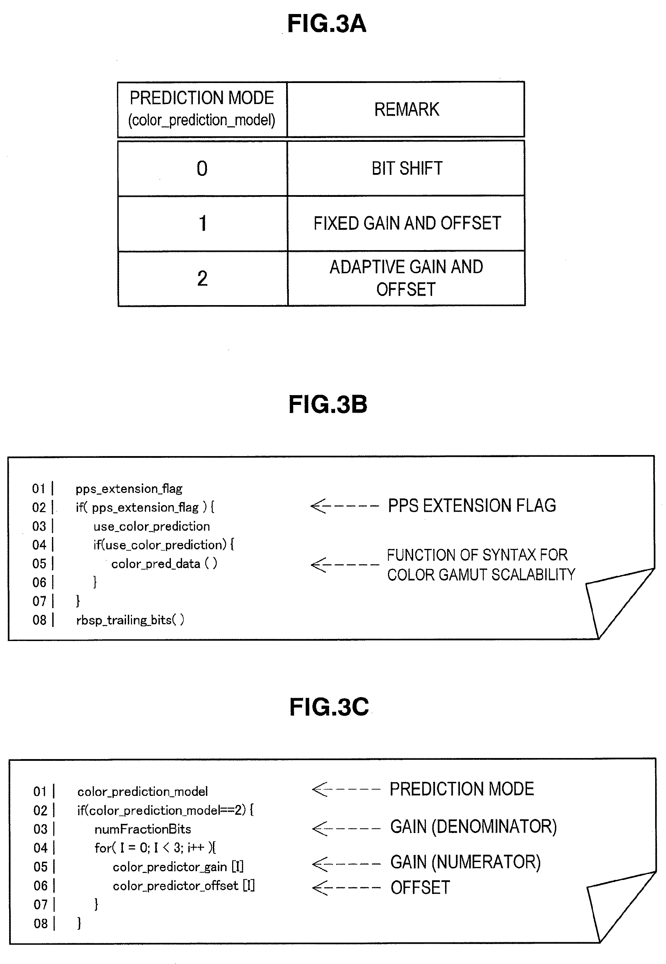

FIG. 3A is a table showing a prediction mode for color gamut prediction proposed by Non-Patent Literature 3. Referring to FIG. 3A, a prediction mode number is one of "0," "1," and "2," i.e., there are three kinds of candidates of prediction modes. When the prediction mode number = "0," pixel values $(Y_{2020}, U_{2020}, V_{2020})$ of BT.2020 are predicted from pixel values $(Y_{709}, U_{709}, V_{709})$ of BT.709 of color components by bit shift (bit increment), as in the following equations (1) to (3). Such a prediction mode is referred to as a bit shift mode in the present specification.

[Math 1]

$$Y_{2010} = Y_{709} << 2 \quad (1)$$

$$U_{2010} = U_{709} << 2 \quad (2)$$

$$V_{2010} = V_{709} << 2 \quad (3)$$

When the prediction mode number = "1" or "2," pixel values of BT.2020 are predicted from pixel values of BT.709 of color components by linear conversion using a gain $g_i$ and an offset $o_i$ (where i = 1, 2, 3), as in the following equations (4) to (6).

[Math 2]

$$Y_{2010} = g_1 \cdot Y_{709} + o_1 \quad (4)$$

$$U_{2010} = g_2 \cdot U_{709} + o_2 \quad (5)$$

$$V_{2010} = g_3 \cdot V_{709} + o_3 \quad (6)$$

When the prediction mode number = "1," fixed values specified in advance as the values of a gain and an offset are used. The prediction mode in which the prediction mode number = "1" is referred to as a fixed parameter mode in the present specification. When the prediction mode number = "2," variable values adaptively designated as the values of a gain and an offset are used. The prediction mode in which the prediction mode number = "2" is referred to as an adaptive parameter mode in the present specification. When the adaptive parameter mode is selected, six kinds of prediction parameters (three gains and three offsets) are additionally encoded as prediction parameters.

FIGS. 3B and 3C are explanatory views illustrating the syntax of prediction parameters proposed in Non-Patent Literature 3. Here, "pps_extension_flag" in the 2nd line of FIG. 3B is a flag that indicates whether Picture Parameter Set (PPS) includes a syntax extended for color gamut prediction. In addition, "color_pred_data()" in the 5th line of FIG. 3B is a function of a syntax for color gamut scalability and its content is shown in FIG. 3C. Here, "color_prediction_model" in the 1st line of FIG. 3C is a parameter that indicates a selected prediction mode and takes one value among "0," "1," and "2" exemplified in FIG. 3A. In the case of the adaptive parameter mode ("color_prediction_model = 2"), the number of bits ("numFractionBits") corresponding to a denominator of a gain in the 3rd line, a numerator ("color_prediction_gain[I]" of a gain for an i-th color component in the 5th line, and an offset ("color_prediction offset[I]") for the i-th color component in the 6th line are designated.

Of the three prediction modes, the adaptive parameter mode is a mode for which the highest prediction accuracy can be expected. However, in the adaptive parameter mode, a gain and an offset of each color component are encoded for each picture. Therefore, inter layer prediction with high accuracy can be implemented in a certain region in an image. On the other hand, the accuracy of the inter layer prediction is low in other regions in some cases. Accordingly, in embodiments to be described below, setting prediction parameters appropriate for each block included in an image are suggested in order to suppress a variation in the accuracy of the inter layer prediction.

[1-3. Basic Configuration Example of Encoder]

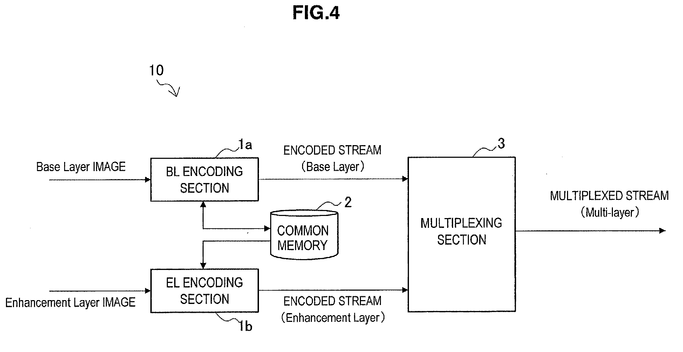

FIG. 4 is a block diagram showing a schematic configuration of an image encoding device 10 according to an embodiment supporting scalable video coding. Referring to FIG. 4, the image encoding device 10 includes a base layer (BL) encoding section 1a, an enhancement layer (EL) encoding section 1b, a common memory 2, and a multiplexing section 3.

The BL encoding section 1a encodes a base layer image to generate an encoded stream of the base layer. The EL encoding section 1b encodes an enhancement layer image to generate an encoded stream of an enhancement layer. The common memory 2 stores information commonly used between layers. The multiplexing section 3 multiplexes an encoded stream of the base layer generated by the BL encoding section 1a and an encoded stream of at least one enhancement layer generated by the EL encoding section 1b to generate a multilayer multiplexed stream.

[1-4. Basic Configuration Example of Decoder]

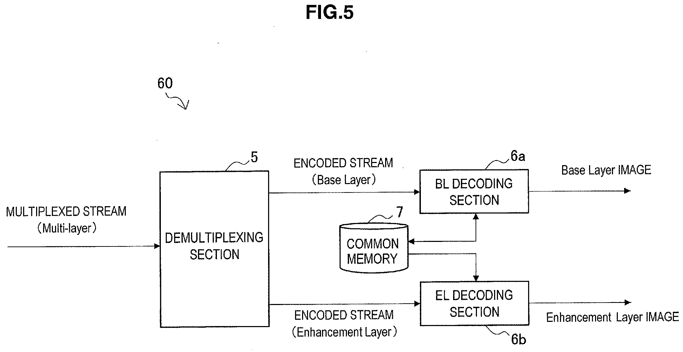

FIG. 5 is a block diagram showing a schematic configuration of an image decoding device 60 according to an embodiment supporting scalable video coding. Referring to FIG. 5, the image decoding device 60 includes a demultiplexing section 5, a base layer (BL) decoding section 6a, an enhancement layer (EL) decoding section 6b, and a common memory 7.

The demultiplexing section 5 demultiplexes a multilayer multiplexed stream into an encoded stream of the base layer and an encoded stream of at least one enhancement layer. The BL decoding section 6a decodes a base layer image from an encoded stream of the base layer. The EL decoding section 6b decodes an enhancement layer image from an encoded stream of an enhancement layer. The common memory 7 stores information commonly used between layers.

In the image encoding device 10 illustrated in FIG. 4, the configuration of the BL encoding section 1a to encode the base layer and that of the EL encoding section 1b to encode an enhancement layer are similar to each other. Some parameters and images generated or acquired by the BL encoding section 1a may be buffered by using the common memory 2 and reused by the EL encoding section 1b. In the next section, such a configuration of the EL encoding section 1b will be described in detail.

Similarly, in the image decoding device 60 illustrated in FIG. 5, the configuration of the BL decoding section 6a to decode the base layer and that of the EL decoding section 6b to decode an enhancement layer are similar to each other. Some parameters and images generated or acquired by the BL decoding section 6a may be buffered by using the common memory 7 and reused by the EL decoding section 6b. Further in the next section, such a configuration of the EL decoding section 6b will be described in detail.

<2. Configuration Example of EL Encoding Section in an Embodiment>

[2-1. Overall Configuration]

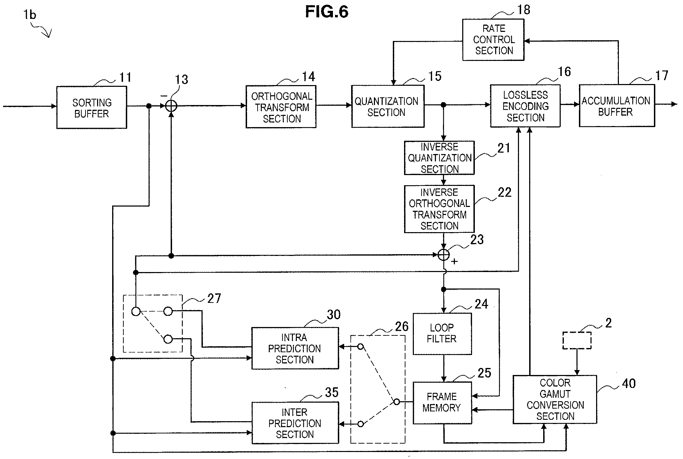

FIG. 6 is a block diagram showing an example of the configuration of the EL encoding section 1b illustrated in FIG. 4. Referring to FIG. 6, the EL encoding section 1b includes a sorting buffer 11, a subtraction section 13, an orthogonal transform section 14, a quantization section 15, a lossless encoding section 16, an accumulation buffer 17, a rate control section 18, an inverse quantization section 21, an inverse orthogonal transform section 22, an addition section 23, a loop filter 24, a frame memory 25, selectors 26 and 27, an intra prediction section 30, an inter prediction section 35, and a color gamut conversion section 40.

The sorting buffer 11 sorts the images included in the series of image data. After reordering the images according to a GOP (Group of Pictures) structure according to the encoding process, the sorting buffer 11 outputs the image data which has been sorted to the subtraction section 13, the intra prediction section 30, the inter prediction section 35, and the color gamut conversion section 40.

The image data input from the sorting buffer 11 and predicted image data input by the intra prediction section 30 or the inter prediction section 35 described later are supplied to the subtraction section 13. The subtraction section 13 calculates prediction error data which is a difference between the image data input from the sorting buffer 11 and the predicted image data and outputs the calculated prediction error data to the orthogonal transform section 14.

The orthogonal transform section 14 performs orthogonal transform on the prediction error data input from the subtraction section 13. The orthogonal transform to be performed by the orthogonal transform section 14 may be discrete cosine transform (DCT) or Karhunen-Loeve transform, for example. In HEVC, an orthogonal transform is performed for each block called a transform unit (TU). The TU is a block formed by dividing a coding unit (CU). The orthogonal transform section 14 outputs transform coefficient data acquired by the orthogonal transform process to the quantization section 15.

The quantization section 15 is supplied with the transform coefficient data input from the orthogonal transform section 14 and a rate control signal from the rate control section 18 to be described below. The quantization section 15 quantizes the transform coefficient data in a quantization step decided according to the rate control signal. The quantization section 15 outputs the quantized transform coefficient data (hereinafter referred to as quantized data) to the lossless encoding section 16 and the inverse quantization section 21.

The lossless encoding section 16 performs a lossless encoding process on the quantized data input from the quantization section 15 to generate an encoded stream of an enhancement layer. The lossless encoding section 16 encodes various parameters referred to when the encoded stream is decoded and inserts the encoded parameters into a header region of the encoded stream. The parameters encoded by the lossless encoding section 16 can include information regarding intra prediction and information regarding inter prediction to be described below. Information related to the color gamut conversion can further be encoded. Then, the lossless encoding section 16 outputs the generated encoded stream to the accumulation buffer 17.

The accumulation buffer 17 temporarily accumulates an encoded stream input from the lossless encoding section 16 using a storage medium such as a semiconductor memory. Then, the accumulation buffer 17 outputs the accumulated encoded stream to a transmission section (not shown) (for example, a communication interface or an interface to peripheral devices) at a rate in accordance with the band of a transmission path.

The rate control section 18 monitors the free space of the accumulation buffer 17. Then, the rate control section 18 generates a rate control signal according to the free space on the accumulation buffer 17, and outputs the generated rate control signal to the quantization section 15. For example, when there is not much free space on the accumulation buffer 17, the rate control section 18 generates a rate control signal for lowering the bit rate of the quantized data. Also, for example, when the free space on the accumulation buffer 17 is sufficiently large, the rate control section 18 generates a rate control signal for increasing the bit rate of the quantized data.

The inverse quantization section 21, the inverse orthogonal transform section 22, and the addition section 23 form a local decoder. In the quantization step used by the quantization section 15, the inverse quantization section 21 performs inverse quantization on the quantized data of an enhancement layer to thereby restore the transform coefficient data. Then, the inverse quantization section 21 outputs the restored transform coefficient data to the inverse orthogonal transform section 22.

The inverse orthogonal transform section 22 performs an inverse orthogonal transform process on the transform coefficient data input from the inverse quantization section 21 to thereby restore the prediction error data. As in the orthogonal transform, the inverse orthogonal transform is performed for each TU. Then, the inverse orthogonal transform section 22 outputs the restored prediction error data to the addition section 23.

The addition section 23 adds the restored prediction error data input from the inverse orthogonal transform section 22 and the predicted image data input from the intra prediction section 30 or the inter prediction section 35 to thereby generate decoded image data (reconstructed image of the enhancement layer). Then, the addition section 23 outputs the generated decoded image data to the loop filter 24 and the frame memory 25.

The loop filter 24 includes a filter group for the purpose of improving image quality. A deblock filter (DF) is a filter that reduces block artifact occurring when an image is encoded. A sample adaptive offset (SAO) filter is a filter that adds an adaptively decided offset value to each pixel value. An adaptive loop filter (ALF) is a filter that minimizes an error between an image subjected to the SAO and an original image. The loop filter 24 filters the decoded image data input from the addition section 23 and outputs the filtered decoded image data to the frame memory 25.

The frame memory 25 stores the decoded image data of the enhancement layer input from the addition section 23, the filtered decoded image data of the enhancement layer input from the loop filter 24, and reference image data of the base layer input from the color gamut conversion section 40 using a storage medium.

The selector 26 reads out, from the frame memory 25, the decoded image data that has not yet been filtered and is to be used for intra prediction, and supplies the read-out decoded image data to the intra prediction section 30 as reference image data. The selector 26 also reads out, from the frame memory 25, the filtered decoded image data to be used for inter prediction, and supplies the read-out decoded image data to the inter prediction section 35 as reference image data. When inter layer prediction is performed by the intra prediction section 30 or the inter prediction section 35, the selector 26 supplies the reference image data of the base layer to the intra prediction section 30 or the inter prediction section 35.

The selector 27 outputs, to the subtraction section 13, the predicted image data that is a result of intra prediction output from the intra prediction section 30, and outputs information on intra prediction to the lossless encoding section 16 in the intra prediction mode. The selector 27 also outputs, to the subtraction section 13, the predicted image data that is a result of inter prediction output from the inter prediction section 35, and outputs information on inter prediction to the lossless encoding section 16 in the inter prediction mode. The selector 27 switches the intra prediction mode and the inter prediction mode in accordance with the magnitude of a cost function value.

The intra prediction section 30 performs an intra prediction process on each prediction unit (PU) of HEVC based on the original image data and the decoded image data of the enhancement layer. For example, the intra prediction section 30 evaluates a prediction result according to each candidate mode in a prediction mode set using a predetermined cost function. Next, the intra prediction section 30 selects a prediction mode in which a cost function value is the minimum, i.e., a prediction mode in which a compression ratio is the highest, as an optimum prediction mode. The intra prediction section 30 generates predicted image data of the enhancement layer according to the optimum prediction mode. The intra prediction section 30 may include intra BL prediction which is a kind of inter layer prediction in the prediction mode set in the enhancement layer. In the intra BL prediction, a corresponding block in the base layer corresponding to a prediction target block of the enhancement layer is used as a reference block, and a predicted image is generated based on a decoded image of the reference block. The intra prediction section 30 may include intra residual prediction which is a kind of inter layer prediction. In the intra residual prediction, a predicted error of intra prediction is predicted based on the prediction error image of the reference block which is the corresponding block in the base layer, and a predicted image for which the predicted error has been predicted and added is generated. The intra prediction section 30 outputs information regarding the intra prediction including prediction mode information indicating the selected optimum prediction mode, the cost function value, and the predicted image data to the selector 27.

The inter prediction section 35 performs an inter prediction process on each prediction unit (PU) of HEVC based on the original image data and the decoded image data of the enhancement layer. For example, the inter prediction section 35 evaluates a prediction result according to each candidate mode in a prediction mode set using a predetermined cost function. Next, the inter prediction section 35 selects a prediction mode in which a cost function value is the minimum, i.e., a prediction mode in which a compression ratio is the highest, as an optimum prediction mode. The inter prediction section 35 generates predicted image data of the enhancement layer according to the optimum prediction mode. The inter prediction section 35 may include inter residual prediction which is a kind of inter layer prediction. In the inter residual prediction, a predicted error of intra prediction is predicted based on the prediction error image of the reference block which is the corresponding block in the base layer, and a predicted image for which the predicted error has been predicted and added is generated. The intra prediction section 35 outputs information regarding the intra prediction including prediction mode information and motion information indicating the selected optimum prediction mode, the cost function value, and the predicted image data to the selector 27.

The color gamut conversion section 40 up-samples the image (the decoded image or the prediction error image) of the base layer buffered in the common memory 2 according to a resolution ratio between the base layer and the enhancement layer. When the image of the enhancement layer has a different color gamut from the image of the base layer, the color gamut conversion section 40 converts the color gamut of the up-sampled image of the base layer into the same color gamut as the image of the enhancement layer. In the embodiment, on the assumption of a linear relation independent for each color component between the color gamuts of the base layer and the enhancement layer, the color gamut conversion section 40 converts the color gamut by approximately predicting the image of the enhancement layer from the image of the base layer. The predicted image of which the color gamut is converted by the color gamut conversion section 40 can be stored in the frame memory 25 to be used as a reference image in the inter layer prediction by the intra prediction section 30 or the inter prediction section 35. That is, the image of the enhancement layer is encoded using the predicted image generated by the color gamut conversion section 40. The color gamut conversion section 40 generates several pieces of information regarding the color gamut conversion. The information generated by the color gamut conversion section 40 includes, for example, prediction mode information indicating a prediction mode of color gamut prediction. When the adaptive parameter mode is selected as the prediction mode, the information generated by the color gamut conversion section 40 includes parameter information directly designating the prediction parameters (that is, the gain and the offset) for each color component or indirectly designating the prediction parameters by the prediction encoding. In the embodiment, the color gamut conversion section 40 sets the prediction parameters in each block included in the image and outputs the information which is the information regarding the color gamut conversion and includes prediction mode information and the parameter information to the lossless encoding section 16. The lossless encoding section 16 encodes the information regarding the color gamut conversion.

[2-2. First Embodiment of Color Gamut Conversion Section]

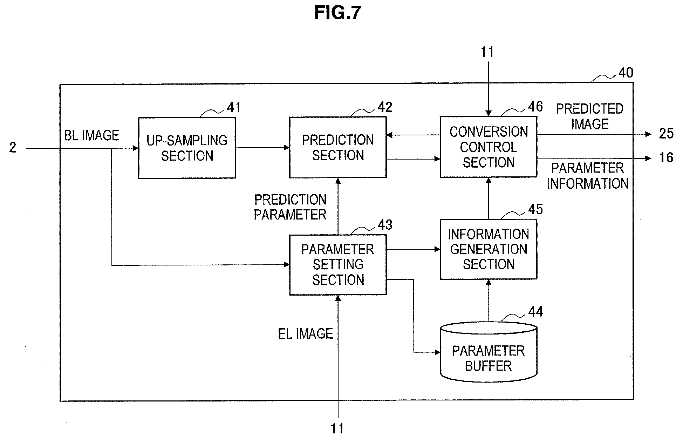

FIG. 7 is a block diagram showing an example of the configuration of a color gamut conversion section according to a first embodiment. Referring to FIG. 7, the color gamut conversion section 40 includes an up-sampling section 41, a prediction section 42, a parameter setting section 43, a parameter buffer 44, an information generation section 45, and a conversion control section 46.

(1) Up-sampling section

The up-sampling section 41 up-samples the image of the base layer acquired from the common memory 2 according to a resolution ratio between the base layer and the enhancement layer. More specifically, the up-sampling section 41 calculates an interpolated pixel value of each of interpolated pixels sequentially scanned according to the resolution ratio by filtering the image of the base layer with a predefined filter coefficient. Thus, a space resolution of the image of the base layer can be increased up to the same resolution as that of the enhancement layer. The up-sampling section 41 outputs the up-sampled image to the prediction section 42 and the parameter setting section 43.

(2) Prediction Section

The prediction section 42 converts the color gamut of the up-sampled image of the base layer input from the up-sampling section 41 into the same color gamut as that of the image of the enhancement layer according to each of the candidates for the prediction modes. For example, in the bit shift mode, the prediction section 42 calculates a predicted pixel value by shifting the pixel value of the base layer subjected to the up-sampling to the left by a predetermined bit shift amount $n_{shift}$ according to equations (1) to (3). The bit shift amount $n_{shift}$ may be 2 or 4, for example, when an HD television image is converted into a UHD television image. In the fixed parameter mode, the prediction section 42 calculates a predicted pixel value by multiplying the pixel value of the base layer subjected to the up-sampling by a fixed gain and further adding a fixed offset according to equations (4) to (6). In the adaptive parameter mode, the prediction section 42 calculates predicted pixel values using the prediction parameters set adaptively for each block by the parameter setting section 43, that is, the gain and the offset, instead of the fixed gain and offset. Then, the prediction section 42 outputs the predicted image generated for each of the candidates for the prediction modes to the conversion control section 46.

(3) Parameter Setting Section

The parameter setting section 43 sets prediction parameters, which are used when the image of the enhancement layer with a color gamut different from that of the base layer is predicted from the image of the base layer in the adaptive parameter mode, for each block included in the image of the enhancement layer. The prediction parameters includes the gain $g_i$ and the offset $o_i$ (where i = 1, 2, 3) shown in equations (4) to (6). Here, the subscript i means each of 3 types of color components. The gain $g_i$ is a coefficient by which the pixel value of the base layer is multiplied. The offset $o_i$ is a numerical value added to a product of the pixel value of the base layer and the gain $g_i$. For example, the parameter setting section 43 calculates a gain and an offset of the image of the base layer acquired from the common memory 2 which is the closest to the original image of the enhancement layer input from the sorting buffer 11, for each color component of a block of interest in terms of the least-squares method. In practice, an algorithm of the least-squares method may be simply implemented according to a method of using a lookup table. The parameter setting section 43 sets the calculated gain and offset in the block of interest. Here, the block of interest may be each of the series of largest coding units (LCUs) scanned with a raster length in pictures, slices, or tiles. Instead, the prediction parameters may be set for each of different types of blocks such as slices, CUs, or PUs. The parameter setting section 43 causes the parameter buffer 44 to buffer the prediction parameters set in the block of interest.

(4) Parameter Buffer

The parameter buffer 44 temporarily buffers the prediction parameters for the adaptive parameter mode which are calculated for each block by the parameter setting section 43 in a storage medium such as a semiconductor memory. The prediction parameters of the block buffered by the parameter buffer 44 are referred to when the prediction parameters of an adjacent block or a collocated block are subjected to the prediction encoding.

(5) Information Generation Section

The information generation section 45 generates parameter information used for decoding in order to set the prediction parameters of each block of interest. For example, the information generation section 45 selects one or more reference blocks for each block of interest and decides predicted values of the prediction parameters of the block of interest from the prediction parameters set in the selected reference block. The information generation section 45 calculates difference values of the prediction parameters by subtracting the predicted values from the values of the prediction parameters set in the block of interest. The information generation section 45 generates reference block information indicating which reference block is used to predict the prediction parameters and difference information indicating the difference values of the prediction parameters as parameter information regarding the block of interest. The parameter information generated by the information generation section 45 is output to the conversion control section 46.

The candidate for the reference block for the prediction encoding of the prediction parameters can include a top adjacent block and a left adjacent block adjacent to the block of interest. The candidate for the reference block may include a collocated block in the reference image (of the block of interest) of the inter prediction. The predicted values of the block of interest decided from the prediction parameters of the reference block may be the same as the values of the prediction parameters of any one reference block. Instead, the predicted values may be average values of the prediction parameters of two or more reference blocks. When any one adjacent block is not available, for example, when the block of interest is located at an end of a picture, a slice, or a tile, the unavailable adjacent block is excluded from the candidates for reference blocks. When the available reference block is not present, the information generation section 45 can generate parameter information directly designating the values of the prediction parameters for the block of interest using the syntax described with reference to FIG. 3C. Even when the available reference block is present, the information generation section 45 may generate reference block information indicating that any reference block is not used to predict the prediction parameters and may generate parameter information directly designating the values of the prediction parameters for the block of interest. The values of the prediction parameters of each block may be predefined or may be designated as differences from default values which can be set in units of sequences, pictures, or the like.

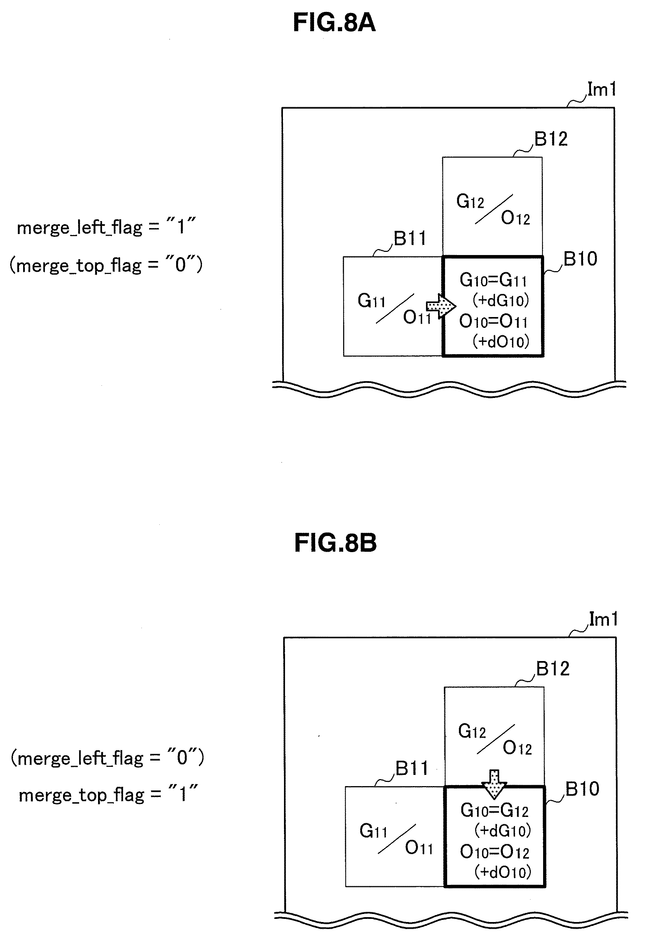

FIG. 8A is an explanatory diagram illustrating a first example of the parameter information which can be encoded in the first embodiment. In FIG. 8A, an image Im1 is an image of the enhancement layer. A block B10 is a block of interest in the image Im1. A block B11 is a left adjacent block of the block B10. A block B 12 is a top adjacent block of the block B10. For example, the reference block information includes a flag merge_left_flag. When the flag merge_left_flag is true (=1), predicted values of a gain $G_{10}$ and an offset $0_{10}$ of the block B10 of interest are the same as the values of a gain $G_{11}$ and an offset $O_{11}$ of the left adjacent block B11. The gain $G_{10}$ of the block B10 of interest is a sum of a predicted value $G_{11}$ and a difference value $dG_{10}$. The offset $0_{10}$ of the block B10 of interest is a sum of a predicted value $O_{11}$ and a difference value $dO_{10}$. In this case, a flag merge_top_flag to be described below may not be encoded.

FIG. 8B is an explanatory diagram illustrating a second example of the parameter information which can be encoded in the first embodiment. In FIG. 8B, the image Im1 of the enhancement layer also includes the block B10 of interest and the adjacent blocks B11 and B12. For example, the reference block information includes the flag merge_top_flag. When the flag merge_top_flag is true (=1), the predicted values of the gain $G_{10}$ and the offset $O_{10}$ of the block B10 of interest are the same as the values of a gain $G_{12}$ and an offset $O_{12}$ of the top adjacent block B12. The

gain $G_{10}$ of the block B10 of interest is a sum of a predicted value $G_{12}$ and the difference value $dG_{10}$. The offset $O_{10}$ of the block B10 of interest is a sum of a predicted value $O_{12}$ and the difference value $dO_{10}$. In this case, the flag merge_left_flag described above may not be encoded.

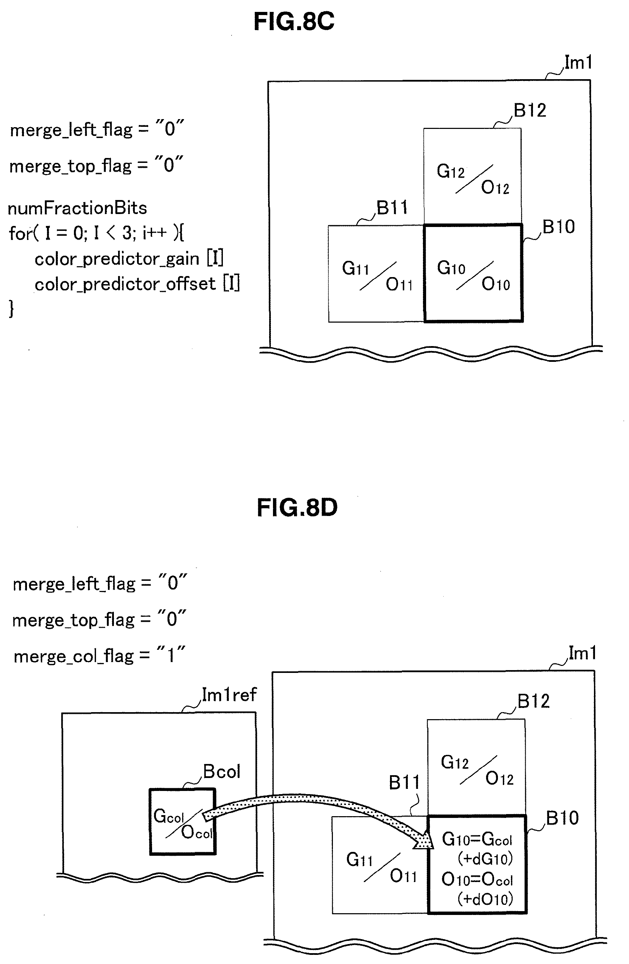

FIG. 8C is an explanatory diagram illustrating a third example of the parameter information which can be encoded in the first embodiment. In FIG. 8C, the image Im1 of the enhancement layer also includes the block B10 of interest and the adjacent blocks B11 and B12. For example, the reference block information includes the flag merge_left_flag and the flag merge_top_flag. When the flags are all false (=0), the values of the gain $G_{10}$ and the offset $O_{10}$ of the block B10 of interest are not predicted from the setting of the reference block. Instead, parameter information directly designating the values of the gain $G_{10}$ and the offset $O_{10}$ of the block B10 of interest (with the syntax described with reference to FIG. 3C, for example) can be generated and encoded.

FIG. 8D is an explanatory diagram illustrating a fourth example of the parameter information which can be encoded in the first embodiment. In FIG. 8D, the image Im1 of the enhancement layer also includes the block B10 of interest and the adjacent blocks B11 and B12. An image Im1ref is a reference image in the inter prediction of the image Im1 of interest. A block Bcol is a collocated block of the block B10 of interest. For example, the reference block information includes the flag merge_left_flag, the flag merge_top_flag, and a flag merge_col_flag. When the flag merge_col_flag is true (=1), the predicted values of the gain $G_{10}$ and the offset $O_{10}$ of the block B10 of interest are the same as the values of a gain $G_{col}$ and an offset $O_{col}$ of the collocated block Bcol. The gain $G_{10}$ of the block B10 of interest is a sum of a predicted value $G_{col}$ and the difference value $dG_{10}$. The offset $O_{10}$ of the block B10 of interest is a sum of the predicted value $O_{col}$ and the difference value $dO_{10}$.

(6) Conversion Control Section

From the viewpoint of encoding efficiency, the conversion control section 46 selects the optimum prediction mode based on information relevant to predicted images of a plurality of candidates of the prediction modes input from the prediction section 42. When the conversion control section 46 selects the bit shift mode or the fixed parameter mode, the conversion control section 46 outputs the prediction mode information indicating the selected mode to the lossless encoding section 16 to store the corresponding predicted image in the frame memory 25. The prediction mode may be selected for each block or may be selected in units greater than the units of pictures, slices, tiles, or the like. When the conversion control section 46 selects the adaptive parameter mode, the conversion control section 46 outputs the prediction mode information and parameter information designating the prediction parameters to be set in each block to the lossless encoding section 16 to store the corresponding predicted image in the frame memory 25. As described above, the parameter information can include the reference block information and the difference information for the block subjected to the prediction encoding of the prediction parameters.

[2-3. Second Embodiment of Color Gamut Conversion Section]

In the first embodiment, the prediction parameters of the adaptive parameter mode are calculated using an original image of the block of interest of the enhancement layer and a decoded image of the corresponding block of the base layer on the encoder side. Then, the parameter information for decoding the calculated prediction parameters is transmitted from the encoder side to the decoder side. On the other hand, in a second embodiment, both of the encoder side and the decoder side calculate the prediction parameters of the adaptive parameter mode using decoded images of one or more adjacent blocks adjacent to the block of interest of the enhancement layer and one or more corresponding blocks (that is, one or more blocks adjacent to the corresponding blocks corresponding to the block of interest) of the base layer corresponding to the adjacent block. The parameter information for decoding the prediction parameters is not transmitted.

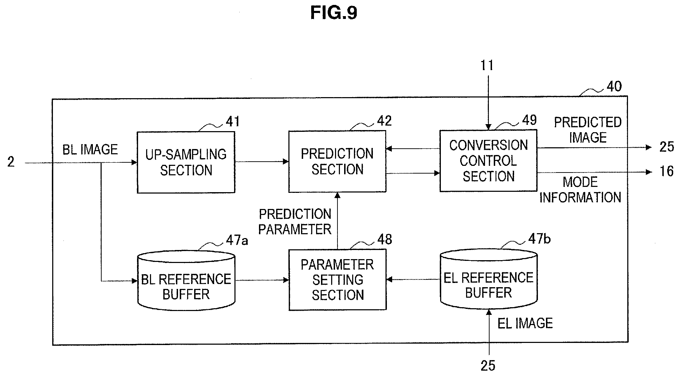

FIG. 9 is a block diagram showing an example of the configuration of the color gamut conversion section 40 according to the second embodiment. Referring to FIG. 9, the color gamut conversion section 40 includes an up-sampling section 41, a prediction section 42, a BL reference buffer 47a, an EL reference buffer 47b, a parameter setting section 48, and a conversion control section 49.

(1) BL Reference Buffer

The BL reference buffer 47a acquires, from the common memory 2, the image of the base layer referred to when the prediction parameters of the adaptive parameter mode are calculated and temporarily buffers the acquired reference image in a storage medium such as a semiconductor memory. The pixels of the base layer referred to when the prediction parameters of the block of interest are calculated may be, for example, the pixels of the corresponding block corresponding to the top or left adjacent block of the block of interest.

(2) EL Reference Buffer

The EL reference buffer 47b acquires, from the frame memory 25, the decoded image (reconstructed image) of the enhancement layer referred to when the prediction parameters of the adaptive parameter mode are calculated and temporarily buffers the acquired reference image in a storage medium such as a semiconductor memory. The pixels of the enhancement layer referred to when the prediction parameters of the block of interest are calculated may be, for example, the pixels of the top or left adjacent block of the block of interest.

(3) Parameter Setting Section

The parameter setting section 48 calculates optimum values of the prediction parameters of the block of interest for the adaptive parameter mode using the pixel values of one or more adjacent blocks adjacent to the block of interest and one or more corresponding blocks of the base layer corresponding to the one or more adjacent blocks. As in the first embodiment, the prediction parameters include a gain $g_i$ and an offset $o_i$; (where i = 1, 2, 3) shown in equations (4) to (6). For example, the parameter setting section 48 can calculate the optimum values of the prediction parameters of the block of interest, that is, the optimum gain and offset in terms of the least-squares method. The parameter setting section 48 sets the calculated gain and the offset in the block of interest. As described above, the block of interest may be each of the series of LCUs scanned with a raster length in pictures, slices, or tiles. Instead, the prediction parameters may be set for each of different types of blocks such as slices, CUs, or PUs.

For example, the parameter setting section 48 decimates some of the pixels of one or more adjacent blocks of the enhancement layer and one or more corresponding blocks of the base layer and calculates the optimum values of the prediction parameters using the pixel values of the remaining pixels. Thus, it is possible to suppress consumption of processing resources (a processor, a memory, and the like) used to calculate the prediction parameters and reduce processing delay. The parameter setting section 48 may change a ratio of the decimated reference pixels depending on the size of the block of interest (for example, decimate more reference pixels as a block size is larger).

The reference pixels for calculating the prediction parameters can include a plurality of pixels on a line at the bottom end of the top adjacent block and a line at the right end of the left adjacent block in the enhancement layer (the same applies to the base layer). When any adjacent block is not available, the unavailable adjacent block is not referred to. When the available adjacent blocks are not present, default values of the prediction parameters which can be predetermined or set in units of sequences, pictures, or the like can be set in the block of interest. Instead, values directly designated by additionally generated parameter information may be set as the prediction parameters in the block of interest.

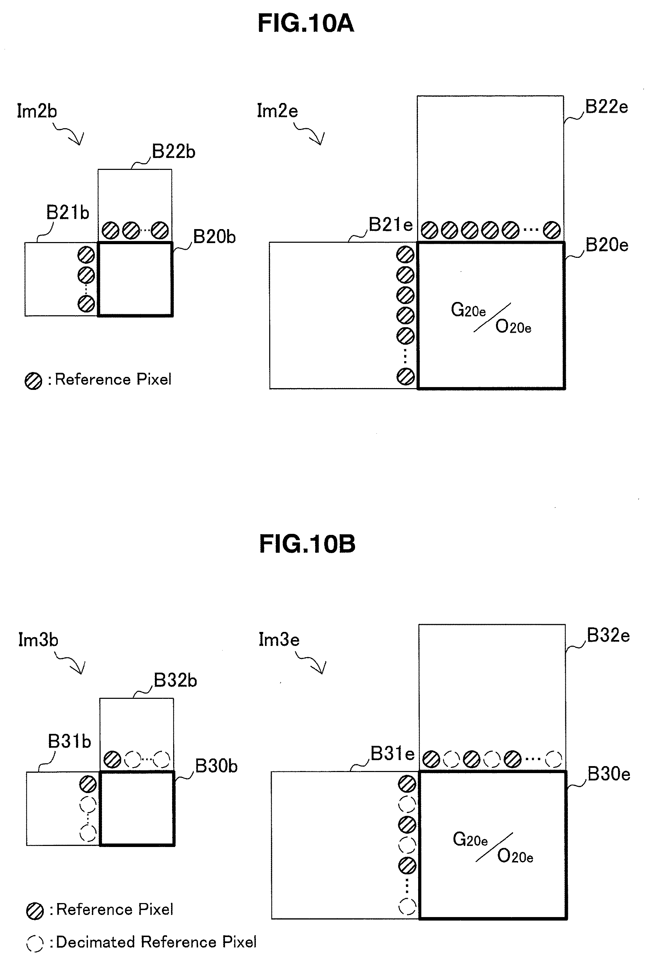

FIG. 10A is a first explanatory diagram illustrating calculation of prediction parameters in the second embodiment. In FIG. 10A, an image Im2e of the enhancement layer includes blocks B20e, B21e, and B22e. The block B20e is a block of interest. The block B21e is a left adjacent block of the block B20e of interest. The block B22e is a top adjacent block of the block B20e of interest. An image Im2b of the base layer includes blocks B20b, B21b, and B22b. The block B20b is a corresponding block corresponding to the block of interest. The block B21b is a corresponding block corresponding to the adjacent block B21e. The block B22b is a corresponding block corresponding to the adjacent block B22e. Pixels hatched by diagonal lines in the drawing are reference pixels. A gain G20e and an offset 020e of the block B20e of interest are calculated so that the reference pixel values of the blocks B21b and B22b are the closest to the reference pixel values of the blocks B21e and B22e through the color gamut conversion.

FIG. 10B is a second explanatory diagram illustrating calculation of the prediction parameters in the second embodiment. Referring to FIG. 10B, an image Im3e of the enhancement layer includes blocks B30e, B31e, and B32e. The block B30e is a block of interest. The block B31e is a left adjacent block of the block B30e of interest. The block B32e is a top adjacent block of the block B30e of interest. An image Im3b of the base layer includes blocks B30b, B31b, and B32b. The block B30b is a corresponding block corresponding to the block of interest. The block B31b is a corresponding block corresponding to the adjacent block B31e. The block B32b is a corresponding block corresponding to the adjacent block B32e. Pixels hatched by diagonal lines in the drawing are reference pixels. Here, one reference pixel is decimated for every two reference pixels. A gain G30e and an offset 030e of the block B30e of interest are calculated so that the pixel values of the decimated reference pixels of the blocks B31b and B32b are the closest to the pixel values of the decimated reference pixels of the blocks B31e and B32e through the color gamut conversion.

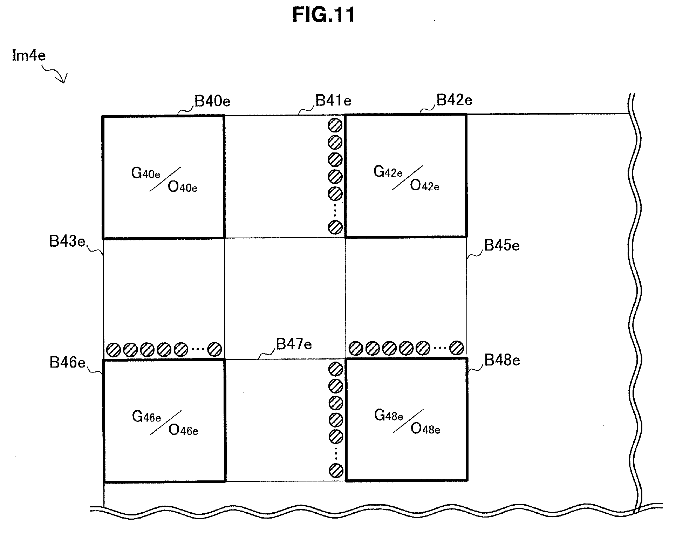

FIG. 11 is an explanatory diagram illustrating a reference pixel for calculating the prediction parameters in the second embodiment. Referring to FIG. 11, an image Im4e of the enhancement layer include blocks B40e, B41e, B42e, B43e, B45e, B46e, B47e, and B48e. The block B40e is located at the top left end of a picture. Therefore, when the block B40e is a block of interest, neither of the left and top adjacent blocks is available. Accordingly, the default values of the prediction parameter can be used for the block B40e. The block B42e is located at the top end of the picture. Therefore, when the block B42e is a block of interest, the top adjacent block is not available. Accordingly, for the block B42e, the values of the prediction parameters can be calculated using the left adjacent block B41e. The block B46e is located at the left end of the picture. Therefore, when the block B46e is a block of interest, the left adjacent block is not available. Accordingly, for the block B46e, the values of the prediction parameters can be calculated using the top adjacent block B43e. The block B48e is not located at any end of the picture. Therefore, when the block B48e is a block of interest, both of the left and top adjacent blocks are available. Accordingly, for the block B48e, the values of the prediction parameters can be calculated using the left adjacent block B47e and the top adjacent block B45e.

(4) Conversion Control Section

The conversion control section 49 selects an optimum prediction mode from the viewpoint of the encoding efficiency based on the information relevant to the predicted images of the plurality of candidates for the prediction mode input from the prediction section 42. The conversion control section 49 outputs prediction mode information indicating the selected optimum prediction mode to the lossless encoding section 16 to store the corresponding predicted image in the frame memory 25. The prediction mode may be selected for each block or may be selected in units larger than units of pictures, slices, tiles, or the like. The conversion control section 49 may output parameter information designating the default values of the prediction parameters for a block which does not have an available adjacent block in the adaptive parameter mode to the lossless encoding section 16.

[2-4. Modification Example of Color Gamut Conversion Section]

As described above, the prediction parameters in the adaptive parameter mode include the gain and the offset. However, in some cases, only adaptive selection of the offset mainly contributes to the improvement in the accuracy of the color gamut conversion depending on the characteristics of an image or a type of color gamut. In such cases, redundant encoding of the gain for each block may deteriorate the encoding efficiency. Further, retrieval of the optimum values of the two variables, the gain and the offset, may waste processing resources since complicated implementation is necessary. Accordingly, as a modification example, the color gamut conversion section 40 may set a fixed value of the gain throughout a plurality of blocks (for example, all of the LCUs in a picture, a slice, or a tile) and may conversely set a variable value of the offset for each block. The gain may be fixed throughout a plurality of pictures or a plurality of sequences. The fixed value of the gain may be encoded or may be defined in advance as a specification. Further, multiplication of a gain and a specific value (typically a power of 2) and a pixel value is equivalent to bit shift of a pixel value. Accordingly, the conversion (prediction) of the color gamut according to the modification example may be expressed as a combination of bit shift and an offset as in the following equations (7) to (9) (the fixed gain in this case is equal to $2^2=4$). The offset $o_i$; (where $i = 1, 2, 3$) may be set for each block or may be set in units larger than units of pictures or the like.

[Math 3]

$$Y_{2010} = Y_{709} << 2 + o_1 \quad (7)$$

$$U_{2010} = U_{709} << 2 + o_2 \quad (8)$$

$$V_{2010} = V_{709} << 2 + o_3 \quad (9)$$

<3. Flow of Encoding Process according to Embodiment>

[3-1. Schematic Flow]

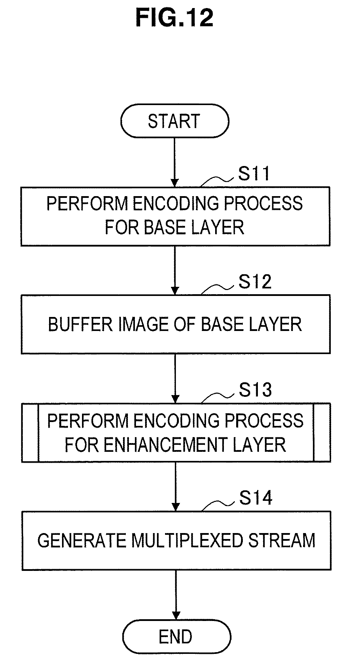

FIG. 12 is a flowchart illustrating an example of a schematic flow of an encoding process according to an embodiment. The description of process steps not directly relating to the technology of the present disclosure is omitted in the drawings for brevity.

FIG. 12 illustrates that, first of all, the BL encoding section 1a executes an encoding process on a base layer, and generates an encoded stream of the base layer (step S11).

The common memory 2 buffers an image (one or both of a decoded image and a prediction error image) of the base layer generated in the encoding process for the base layer (step S12).

Next, the EL encoding section 1b performs an encoding process for the enhancement layer to generate an encoded stream of the enhancement layer (step S13). In the encoding process for the enhancement layer performed herein, the image of the base layer buffered by the common memory 2 is up-sampled by the color gamut conversion section 40 so that the color gamut is converted. Then, the image of the base layer after the color gamut conversion can be used as a reference image in the inter layer prediction.

Then, the multiplexing section 3 multiplexes an encoded stream of the base layer generated by the BL encoding section 1a and an encoded stream of the enhancement layer generated by the EL encoding section 1b to generate a multilayer multiplexed stream (step S 14).

[3-2. Color Gamut Conversion Process (First Embodiment)]

(1) Color Gamut Conversion Process

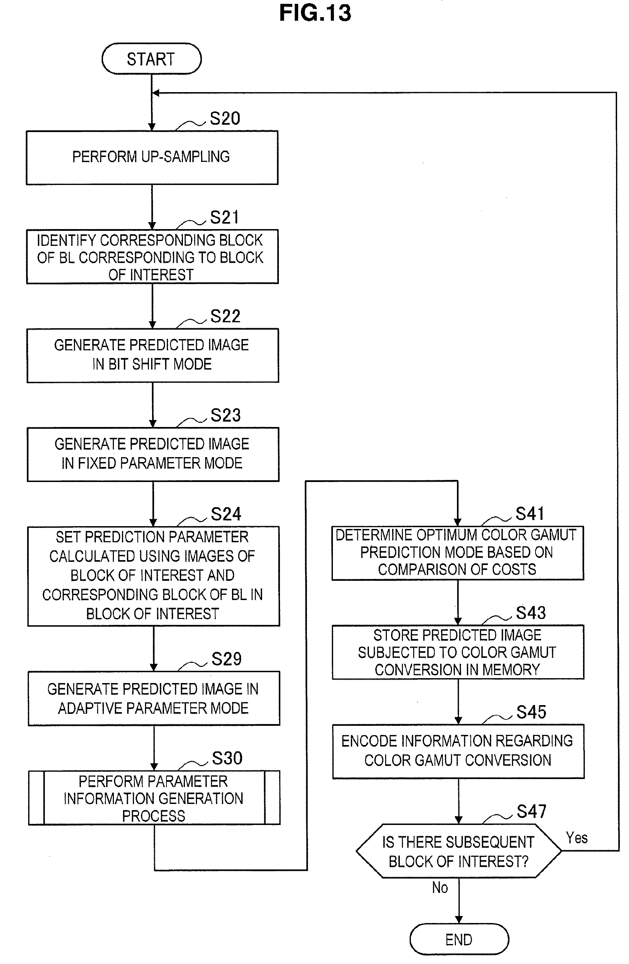

FIG. 13 is a flowchart showing a flow example of a color gamut conversion process in the coding in the first embodiment. The color gamut conversion process described herein can be performed on each of the blocks included in the picture, the slice, or the tile.

Referring to FIG. 13, the up-sampling section 41 first up-samples the image of the base layer acquired from the common memory 2 according to a resolution ratio between the base layer and the enhancement layer (step S20).

The prediction section 42 identifies the corresponding block of the base layer corresponding to the block of interest of the enhancement layer (step S21). Then, the prediction section 42 performs the color gamut prediction in the bit shift mode to generate the predicted image of the block of interest in the bit shift mode (step S22). The prediction section 42 performs the color gamut prediction in the fixed parameter mode to generate the predicted image of the block of interest in the fixed parameter mode (step S23).

The parameter setting section 43 calculates the optimum prediction parameters of the block of interest using the images of the block of interest and the corresponding block of the base layer and sets the calculated prediction parameters in the block of interest (step S24). Then, the prediction section 42 performs the color gamut prediction in the adaptive parameter mode using the prediction parameters set by the parameter setting section 43 to generate the predicted image of the block of interest in the adaptive parameter mode (step S29).

Next, the information generation section 45 performs a parameter information generation process to generate the parameter information for the prediction parameters set in the block of interest (step S30).

Next, the conversion control section 46 determines the optimum prediction mode, for example, by comparing costs based on the information relevant to the predicted images of the plurality of candidates for the prediction mode input from the prediction section 42 (step S41). Then, the conversion control section 46 stores the predicted image which is subjected to the color gamut conversion and corresponds to the determined optimum prediction mode in the frame memory 25 (step S43). The lossless encoding section 16 encodes information regarding the color gamut conversion (step S45). The information encoded herein can include the prediction mode information and the parameter information for the prediction parameters of the block selected in the adaptive parameter mode.

Thereafter, when there is a subsequent unprocessed block of interest, the process returns to step S20 and the above-described processes are repeated on the subsequent block of interest (step S47). When there is no subsequent unprocessed block of interest, the color gamut conversion process shown in FIG. 13 ends.

(2) Parameter Information Generation Process

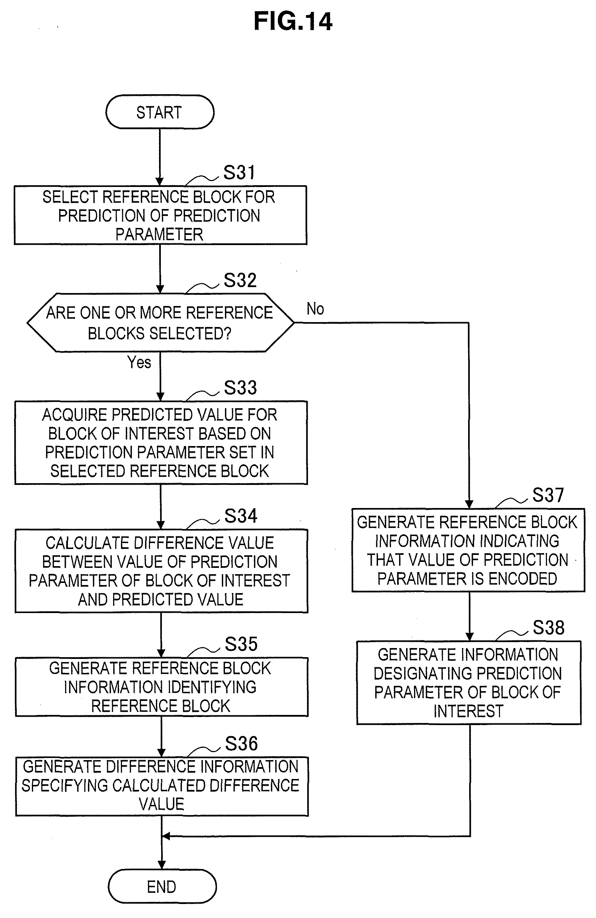

FIG. 14 is a flowchart showing a flow example of the parameter information generation process shown in FIG. 13.

Referring to FIG. 14, the information generation section 45 first selects one or more reference blocks for the prediction of the prediction parameters (step S31). The reference block selected herein is either one block (for example, the block in which the prediction parameters which are the closest to the prediction parameters of the block of interest are set) of the left and top adjacent blocks (or the collocated blocks in addition to the left and top adjacent blocks) or may be a plurality of blocks thereof.

The process branches thereafter depending on whether the one or more reference blocks are selected (step S32). When the one or more reference blocks are selected, the information generation section 45 acquires the predicted values for the block of interest based on the prediction parameters set in the selected reference block (step S33). The predicted values acquired herein may be the same as the values of the prediction parameters set in any reference block or may be average values of the prediction parameters set in the plurality of reference blocks. Next, the information generation section 45 calculates the difference values between the values of the prediction parameters of the block of interest and the acquired predicted values (step S34). Next, the information generation section 45 generates the reference block information identifying the selected reference block (step S35). Then, the information generation section 45 generates difference information specifying the calculated difference values (step S36).

Conversely, when any one reference block is not selected, the information generation section 45 can generate reference block information indicating that any reference block is not referred to (step S37). Then, the information generation section 45 generates information directly designating the prediction parameters of the block of interest (step S38).

In the first embodiment, the parameter information generated as the result of such processes is output from the information generation section 45 to the conversion control section 46. Then, the parameter information is encoded in regard to the block for which the adaptive parameter mode is selected.

[3-3. Color Gamut Conversion Process (Second Embodiment)]

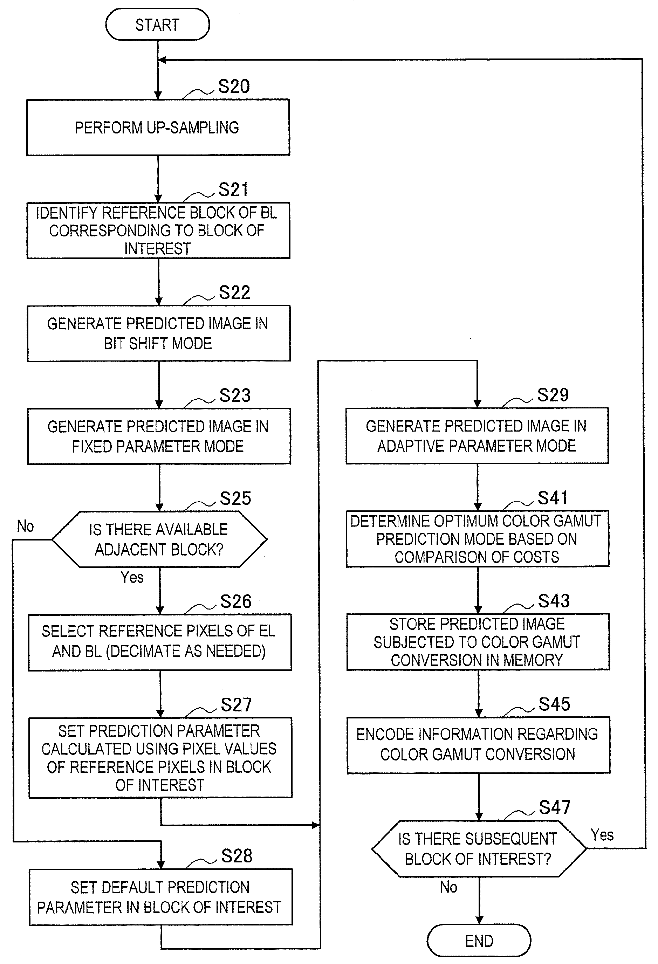

FIG. 15 is a flowchart showing a flow example of the color gamut conversion process for the encoding in the second embodiment. The color gamut conversion process described herein can be performed on each of the blocks included in the picture, the slice, or the tile.

Referring to FIG. 15, the up-sampling section 41 first up-samples the image of the base layer acquired from the common memory 2 according to a resolution ratio between the base layer and the enhancement layer (step S20).

The prediction section 42 identifies the corresponding block of the base layer corresponding to the block of interest of the enhancement layer (step S21). Then, the prediction section 42 performs the color gamut prediction in the bit shift mode to generate the predicted image of the block of interest in the bit shift mode (step S22). The prediction section 42 performs the color gamut prediction in the fixed parameter mode to generate the predicted image of the block of interest in the fixed parameter mode (step S23).

Next, the parameter setting section 48 determines whether there is an available adjacent block in regard to the block of interest (step S25). When there is an available adjacent block, the parameter setting section 48 selects the reference pixels of one or more adjacent blocks of the enhancement layer and the corresponding blocks of the base layer corresponding to the adjacent blocks (step S26). Here, the parameter setting section 48 may decimate the reference pixels of the reference blocks. Then, the parameter setting section 48 calculates the optimum prediction parameters of the block of interest using the pixel values of the selected reference pixels and sets the calculated prediction parameters in the block of interest (step S27). Conversely, when there is no available adjacent block, the parameter setting section 48 sets default prediction parameters in the block of interest (step S28). Then, the prediction section 42 performs the color gamut prediction in the adaptive parameter mode using the prediction parameters set by the parameter setting section 48 to generate the predicted image of the block of interest in the adaptive parameter mode (step S29).

Next, the conversion control section 49 determines the optimum prediction mode, for example, by comparing costs based on the information relevant to the predicted images of the plurality of candidates for the prediction mode input from the prediction section 42 (step S41). Then, the conversion control section 49 stores the predicted image which is subjected to the color gamut conversion and corresponds to the determined optimum prediction mode in the frame memory 25 (step S43). The lossless encoding section 16 encodes information regarding the color gamut conversion (step S45). The information encoded herein can include the prediction mode information.

Thereafter, when there is a subsequent unprocessed block of interest, the process returns to step S20 and the above-described processes are repeated on the subsequent block of interest (step S47). When there is no subsequent unprocessed block of interest, the color gamut conversion process shown in FIG. 15 ends.

<4. Configuration Example of EL Decoding Section in an Embodiment>

[4-1. Overall Configuration]

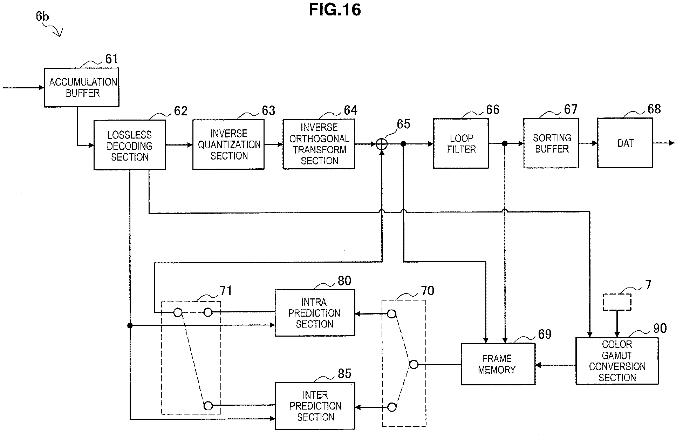

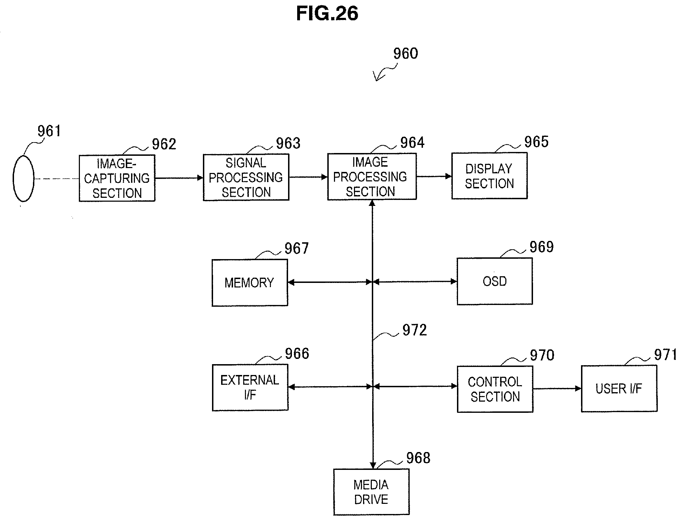

FIG. 16 is a block diagram showing an example of the configuration of the EL decoding section 6b shown in FIG. 5. Referring to FIG. 26, the EL decoding section 6b includes an accumulation buffer 61, a lossless decoding section 62, an inverse quantization section 63, an inverse orthogonal transform section 64, an addition section 65, a loop filter 66, a sorting buffer 67, a digital-to-analog (D/A) conversion section 68, a frame memory 69, selectors 70 and 71, an intra prediction section 80, an inter prediction section 85, and a color gamut conversion section 90.

The accumulation buffer 61 temporarily accumulates the encoded stream of the enhancement layer input from the demultiplexing section 5 using a storage medium.

The lossless decoding section 62 decodes the quantized data of the enhancement layer from the encoded stream of the enhancement layer input from the accumulation buffer 61 according to the encoding scheme used at the time of the encoding. The lossless decoding section 62 decodes the information inserted into the header region of the encoded stream. The information decoded by the lossless decoding section 62 can include, for example, the information regarding the intra prediction and the information regarding the inter prediction. The information related to the color gamut conversion can also be decoded in the enhancement layer. The lossless decoding section 62 outputs the quantized data to the inverse quantization section 63. The lossless decoding section 62 outputs the information regarding the intra prediction to the intra prediction section 80. The lossless decoding section 62 outputs the information regarding the inter prediction to the inter prediction section 85. The lossless decoding section 62 outputs the information related to the color gamut conversion to the color gamut conversion section 90.

The inverse quantization section 63 inversely quantizes the quantized data input from the lossless decoding section 62 in the quantization step used at the time of the encoding to restore the transform coefficient data of the enhancement layer. The inverse quantization section 63 outputs the restored transform coefficient data to the inverse orthogonal transform section 64.

The inverse orthogonal transform section 64 performs an inverse orthogonal transform on the transform coefficient data input from the inverse quantization section 63 according to the orthogonal transform scheme used at the time of the encoding to generate the prediction error data. The inverse orthogonal transform section 64 outputs the generated prediction error data to the addition section 65.

The addition section 65 adds the prediction error data input from the inverse orthogonal transform section 64 and the predicted image data input from the selector 71 to generate decoded image data. Then, the addition section 65 outputs the generated decoded image data to the loop filter 66 and the frame memory 69.

As in the loop filter 24 of the EL encoding section 1b, the loop filter 66 includes a deblock filter that reduces block artifact, a sample adaptive offset filter that adds an offset value to each pixel value, and an adaptive loop filter that minimizes an error with the original image. The loop filter 66 filters the decoded image data input from the addition section 65 and outputs the decoded image data after filtering to the sorting buffer 67 and the frame memory 69.

The sorting buffer 67 sorts the images input from the loop filter 66 to generate a chronological series of image data. Then, the sorting buffer 67 outputs the generated image data to the D/A conversion section 68.

The D/A conversion section 68 converts the image data with a digital format input from the sorting buffer 67 into an image signal with an analog format. Then, the D/A conversion section 68 displays the image of the enhancement layer by outputting the analog image signal to, for example, a display (not shown) connected to the image decoding device 60.

The frame memory 69 uses a storage medium to store the decoded image data that has been input from the addition section 65 and has not yet been filtered, the decoded image data that has been input from the loop filter 66 and has been filtered, and the reference image data of the base layer which has been input from the color gamut conversion section 90.

The selector 70 switches the output destination of the image data from the frame memory 69 between the intra prediction section 80 and the inter prediction section 85 for each block in the image in accordance with mode information acquired by the lossless decoding section 62. For example, when the intra prediction mode is designated, the selector 70 outputs the decoded image data that has been supplied from the frame memory 69 and has not yet been filtered to the intra prediction section 80 as reference image data. When the inter prediction mode is designated, the selector 70 outputs the filtered decoded image data to the inter prediction section 90 as reference image data. When the inter layer prediction is performed in the intra prediction section 80 or the inter prediction section 85, the selector 70 supplies the reference image data of the base layer to the intra prediction section 80 or the inter prediction section 85.

The selector 71 switches the output source of the predicted image data to be supplied to the addition section 65 between the intra prediction section 80 and the inter prediction section 85 in accordance with the mode information acquired by the lossless decoding section 62. For example, when the intra prediction mode is designated, the selector 71 supplies the predicted image data output from the intra prediction section 80 to the addition section 65. When the inter prediction mode is designated, the selector 71 supplies the predicted image data output from the inter prediction section 85 to the addition section 65.

The intra prediction section 80 performs the intra prediction process of the enhancement layer based on the information regarding the intra prediction input from the lossless decoding section 62 and the reference image data from the frame memory 69 to generate predicted image data. The intra prediction process is performed for each PU. When the intra BL prediction or the intra residual prediction is designated as the intra prediction mode, the intra prediction section 80 uses a corresponding block in the base layer corresponding to a prediction target block as a reference block. In the case of the intra BL prediction, the intra prediction section 80 generates the predicted image based on the decoded image of the reference block. In the case of the intra residual prediction, the intra prediction section 80 predicts a prediction error of the intra prediction based on the prediction error image of the reference block and generates the predicted image to which the predicted prediction error is added. The intra prediction section 80 outputs the generated predicted image data of the enhancement layer to the selector 71.

The inter prediction section 85 performs an inter prediction process (motion compensation process) of the enhancement layer based on the information regarding the inter prediction input from the lossless decoding section 62 and the reference image data from the frame memory 69 to generate predicted image data. The inter prediction process is performed for each PU. When the inter residual prediction is designated as the inter prediction mode, the inter prediction section 85 uses a corresponding block in the base layer corresponding to a prediction target block as a reference block. In the case of the inter residual prediction, the inter prediction section 85 predicts a prediction error of the inter prediction based on the prediction error image of the reference block and generates a predicted image to which the predicted prediction error is added. The inter prediction section 85 outputs the generated predicted image data of the enhancement layer to the selector 71.

The color gamut conversion section 90 up-samples the image (the decoded image or the prediction error image) of the base layer buffered in the common memory 7 according to a resolution ratio between the base layer and the enhancement layer. When the image of the enhancement layer has a different color gamut from the image of the base layer, the color gamut conversion section 90 converts the color gamut of the up-sampled image of the base layer into the same color gamut as the image of the enhancement layer. In the embodiment, on the assumption of a linear relation independent for each color component between the color gamuts of the base layer and the enhancement layer, the color gamut conversion section 90 converts the color gamut by approximately predicting the image of the enhancement layer from the image of the base layer. The image of the base layer of which the color gamut is converted by the color gamut conversion section 90 can be stored in the frame memory 69 to be used as a reference image in the inter layer prediction by the intra prediction section 80 or the inter prediction section 85. That is, the image of the enhancement layer is decoded using the predicted image generated by the color gamut conversion section 90. The color gamut conversion section 90 acquires the information regarding the color gamut conversion from the lossless decoding section 62. The information acquired by the color gamut conversion section 90 includes, for example, the prediction mode information indicating the prediction mode. When the adaptive parameter mode is designated as the prediction mode, the parameter information directly designating the prediction parameters (that is, a gain and an offset) of each color component or indirectly designating the prediction parameters through the prediction encoding is also acquired. The color gamut conversion section 90 predicts an image of the enhancement layer from the up-sampled image of the base layer using the parameters acquired from the lossless decoding section 62.

[4-2. First Embodiment of Color Gamut Conversion Section]

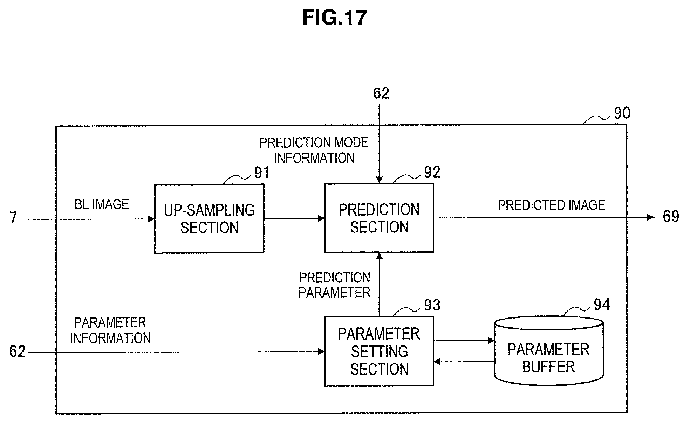

FIG. 17 is a block diagram showing an example of the configuration of the color gamut conversion section 90 according to the first embodiment. Referring to FIG. 17, the color gamut conversion section 90 includes an up-sampling section 91, a prediction section 92, a parameter setting section 93, and a parameter buffer 94.

(1) Up-sampling section

The up-sampling section 91 up-samples the image of the base layer acquired from the common memory 7 according to a resolution ratio between the base layer and the enhancement layer. More specifically, the up-sampling section 91 calculates an interpolated pixel value of each of interpolated pixels sequentially scanned according to the resolution ratio by filtering the image of the base layer with a predefined filter coefficient. Thus, a spatial resolution of the image of the base layer can be increased up to the same resolution as that of the enhancement layer. The up-sampling section 91 outputs the image after the up-sampling to the prediction section 92.

(2) Prediction Section

The prediction section 92 converts the color gamut of the image of the base layer subjected to the up-sampling and input from the up-sampling section 91 into the same color gamut as that of the image of the enhancement layer according to the prediction mode shown in the prediction mode information acquired from the lossless decoding section 62. For example, when the prediction mode information indicates the bit shift mode, the prediction section 92 calculates the predicted pixel values by shifting the pixel values of the base layer subjected to the up-sampling by the predetermined bit shift amount $n_{shift}$ to the left according to equations (1) to (3). When the prediction mode information indicates the fixed parameter mode, the prediction section 92 calculates the predicted pixel values by multiplying the pixel values of the base layer subjected to the up-sampling by the fixed gain and further adding the fixed offset according to equations (4) to (6). When the prediction mode information indicates the adaptive parameter mode, the prediction section 92 calculates the predicted pixel values using the prediction parameters adaptively set for each block by the parameter setting section 93, that is, the gain and the offset. As a result, the predicted image subjected to the color gamut conversion is generated for each block. Then, the prediction section 92 stores the generated predicted image of each block in the frame memory 69.

(3) Parameter Setting Section

The parameter setting section 93 sets the prediction parameters used when the image of the enhancement layer with the color gamut different from that of the base layer is predicted in the adaptive parameter mode from the image of the base layer, for each block included in the image of the enhancement layer. The prediction parameters

include the gain $g_i$ and the offset $o_i$ (where i = 1, 2, 3) shown in equations (4) to (6). More specifically, the parameter setting section 93 acquires the reference block information decoded by the lossless decoding section 62. The reference block information indicates which reference block is used to predict the prediction parameters in regard to the block of interest. The candidate for the reference block can include the top adjacent block and the left adjacent block adjacent to the block of interest. The candidate for the reference block may include a collocated block (of the block of interest) in the reference image of the inter prediction. The parameter setting section 93 acquires the values of the prediction parameters set in the reference block indicated by the acquired reference block information from the parameter buffer 94 and predicts the values of the prediction parameters of the block of interest based on the acquired values of the prediction parameters. Herein, the predicted values may be the same as the values of the prediction parameter of any one reference block. Instead, the predicted values may be average values of the prediction parameters of two or more reference blocks. The parameter setting section 93 sets the prediction parameters in the block of interest using the predicted values of the prediction parameters of the block of interest. The prediction parameters set in the block of interest may be sums of the predicted values based on the setting of the reference block and the difference values indicated by the difference information which can be additionally decoded by the lossless decoding section 62. The parameter setting section 93 causes the parameter buffer 94 to buffer the prediction parameters set in the block of interest.

When any one adjacent block is not available, for example, when the block of interest is located at an end of a picture, a slice, or a tile, the unavailable adjacent block is excluded from the candidates for reference blocks. When there is no available reference block, the parameter setting section 93 sets the values of the prediction parameters directly designated by the parameter information decoded by the lossless decoding section 62 in the block of interest. When there is an available reference block but the reference block information indicates that any reference block is not used to predict the prediction parameters, as in the example of FIG. 8C, the parameter setting section 93 may set the values of the prediction parameters which can be directly designated by the parameter information in the block of interest. Herein, the parameter information may designate differences between the values of the prediction parameters to be set and the default values which are predefined or can be set in units of sequences, pictures, or the like.

(4) Parameter Buffer

The parameter buffer 94 temporarily buffers the prediction parameters for the adaptive parameter mode set for each block by the parameter setting section 93 in a storage medium such as a semiconductor memory. The prediction parameters of the block buffered by the parameter buffer 94 are referred to when the prediction parameters of the adjacent block or the collocated block are subjected to the prediction decoding.

[4-3. Second Embodiment of Color Gamut Conversion Section]

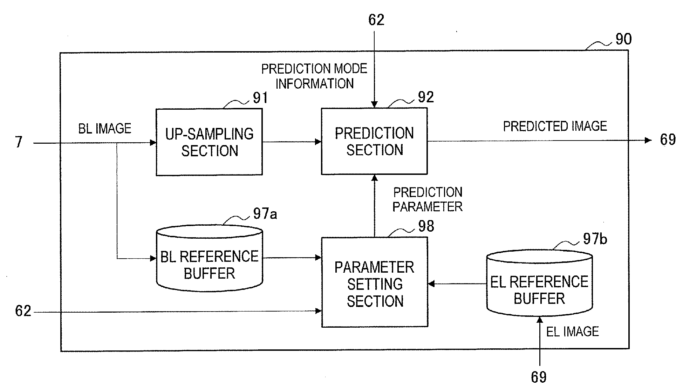

FIG. 18 is a block diagram showing an example of the configuration of the color gamut conversion section 90 according to the second embodiment. Referring to FIG. 18, the color gamut conversion section 90 includes an up-sampling section 91, a prediction section 92, a BL reference buffer 97a, an EL reference buffer 97b, and a parameter setting section 98.

(1) BL Reference Buffer

The BL reference buffer 97a acquires, from the common memory 7, the image of the base layer referred to when the prediction parameters of the adaptive parameter mode are calculated and temporarily buffers the acquired reference image in a storage medium such as a semiconductor memory. The pixels of the base layer referred to when the prediction parameters of the block of interest are calculated may be, for example, the pixels of the corresponding blocks corresponding to the top and left adjacent blocks of the block of interest.

(2) EL Reference Buffer

The EL reference buffer 97b acquires, from the frame memory 69, the decoded image of the enhancement layer referred to when the prediction parameters of the adaptive parameter mode are calculated and temporarily buffers the acquired reference image in a storage medium such as a semiconductor memory. The pixels of the enhancement layer referred to when the prediction parameters of the block of interest are calculated may be, for example, the pixels of the corresponding blocks corresponding to the top and left adjacent blocks of the block of interest.

(3) Parameter Setting Section

The parameter setting section 98 calculates optimum values of the prediction parameters of the block of interest for the adaptive parameter mode using the pixel values of one or more adjacent blocks adjacent to the block of interest and one or more corresponding blocks of the base layer corresponding to the one or more adjacent blocks. An algorithm for calculating the optimum values of the prediction parameters is the same as that of the encoder side. The parameter setting section 98 sets the calculated gain and offset in the block of interest.

For example, the parameter setting section 98 may decimate some of the pixels of one or more adjacent blocks of the enhancement layer and one or more corresponding blocks of the base layer and calculate the optimum values of the prediction parameters using the pixel values of the remaining pixels. Thus, it is possible to suppress consumption of processing resources used to calculate the prediction parameters and reduce processing delay. The parameter setting section 98 may change a ratio of the decimated reference pixels depending on the size of the block of interest

The reference pixels for calculating the prediction parameters can include a plurality of pixels on a line at the bottom end of the top adjacent block and a line at the right end of the left adjacent block in the enhancement layer (the same applies to the base layer). When any adjacent block is not available, the unavailable adjacent block is not referred to. When there is no available adjacent block, the parameter setting section 98 may set the default values of the prediction parameters in the block of interest. Instead, the parameter setting section 98 may set values directly designated by the parameter information decoded by the lossless decoding section 62 as the predicted parameters in the block of interest.

[4-4. Modification Example of Color Gamut Conversion Section]

As described above, in some cases, only adaptive selection of the offset mainly contributes to the improvement in the accuracy of the color gamut conversion depending on the characteristics of an image or a type of color gamut. In the cases, as a modification example, the color gamut conversion section 90 may set a fixed value of the gain throughout a plurality of blocks (for example, all of the LCUs in a picture, a slice, or a tile) and may conversely set a variable value of the offset for each block according to the decoded information. The gain may be fixed through a plurality of pictures or a plurality of sequences. The fixed value of the gain may be decoded from an encoded stream or may be defined in advance as a specification. The offset may be set for each block or may be set in units larger than units of pictures or the like.

<5. Flow of Decoding Process according to Embodiment>

[5-1. Schematic Flow]

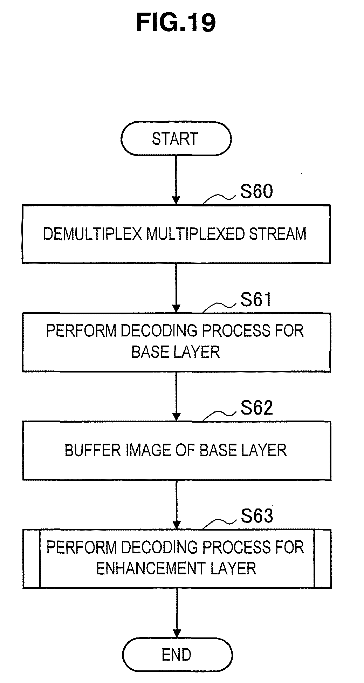

FIG. 19 is a flowchart illustrating an example of a schematic flow of a decoding process according to an embodiment. The description of process steps not directly relating to the technology according to the present disclosure is omitted in the drawings for brevity.

FIG. 19 illustrates that, first of all, the demultiplexing section 5 inversely multiplexes a multiplexed stream of a multi-layer to obtain an encoded stream of a base layer and an encoded stream of an enhancement layer (step S60).

Next, the BL decoding section 6a executes a decoding process on the base layer, and reconstructs a base layer image from the encoded stream of the base layer (step S61).

The common memory 7 buffers an image (one or both of a decoded image and a prediction error image) of the base layer generated in the decoding process for the base layer and the parameters reused between the layers (step S62).

Next, the EL decoding section 6b performs the decoding process for the enhancement layer to reconstruct the image of the enhancement layer (step S63). In the decoding process for the enhancement layer performed herein, the image of the base layer buffered by the common memory 7 is up-sampled by the color gamut conversion section 90 so that the color gamut is converted. The image of the base layer after the color gamut conversion can be used as a reference image in the inter layer prediction.

[5-2. Color Gamut Conversion Process (First Embodiment)]

(1) Color Gamut Conversion Process

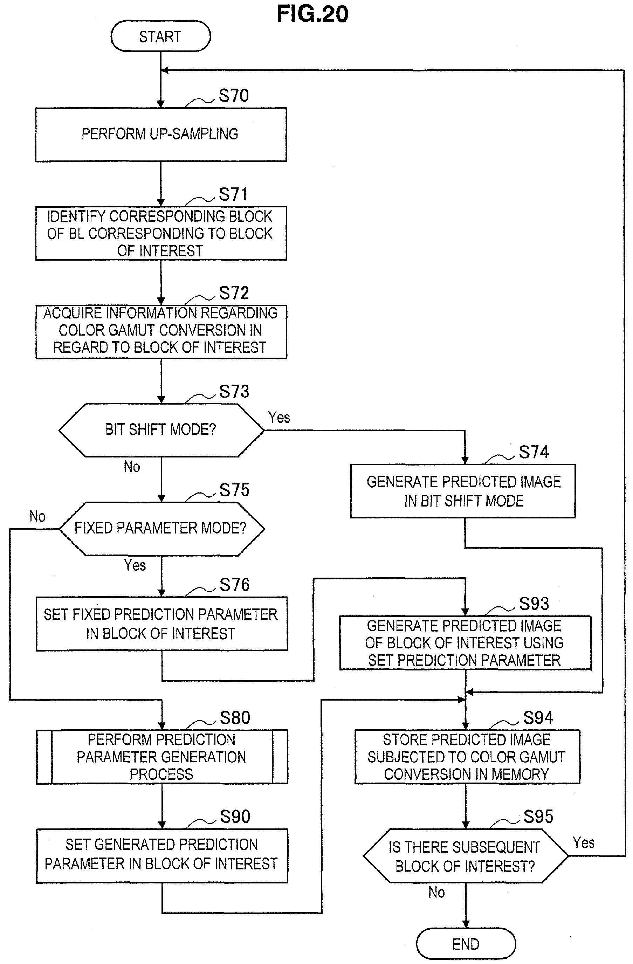

FIG. 20 is a flowchart showing a flow example of the color gamut conversion process for decoding according to the first embodiment. The color gamut conversion process described herein can be performed on each of the blocks included in the picture, the slice, or the tile.

Referring to FIG. 20, the up-sampling section 91 first up-samples the image of the base layer acquired from the common memory 7 according to a resolution ratio between the base layer and the enhancement layer (step S70).

The prediction section 92 identifies a corresponding block of the base layer corresponding to the block of interest of the enhancement layer (step S71). The prediction section 92 acquires the information regarding the color gamut conversion decoded in regard to the block of interest by the lossless decoding section 62 (step S72).

The process branches thereafter depending on the prediction mode indicated by the acquired prediction mode information. When the prediction mode information indicates the bit shift mode (step S73), the prediction section 92 performs the color gamut prediction in the bit shift mode to generate the predicted image of the block of interest (step S74).

When the prediction mode information indicates the fixed parameter mode (step S75), the prediction section 92 sets the fixed prediction parameters in the block of interest (step S76). When the prediction mode information indicates the adaptive parameter mode, the parameter setting section 93 performs the prediction parameter generation process to generate the prediction parameters to be set in the block of interest (step S80). Then, the parameter setting section 93 sets the generated prediction parameters in the block of interest (step S90). The prediction section 92 performs the color gamut prediction using the prediction parameters set in the block of interest to generate the predicted image of the block of interest (step S93).

Then, the prediction section 92 stores the predicted image subjected to the color gamut conversion in the frame memory 69 (step S94). Thereafter, when there is a subsequent unprocessed block of interest, the process returns to step S70 and the above-described processes are repeated on the subsequent block of interest (step S95). When there is no subsequent unprocessed block of interest, the color gamut conversion process shown in FIG. 20 ends.

(2) Prediction Parameter Generation Process

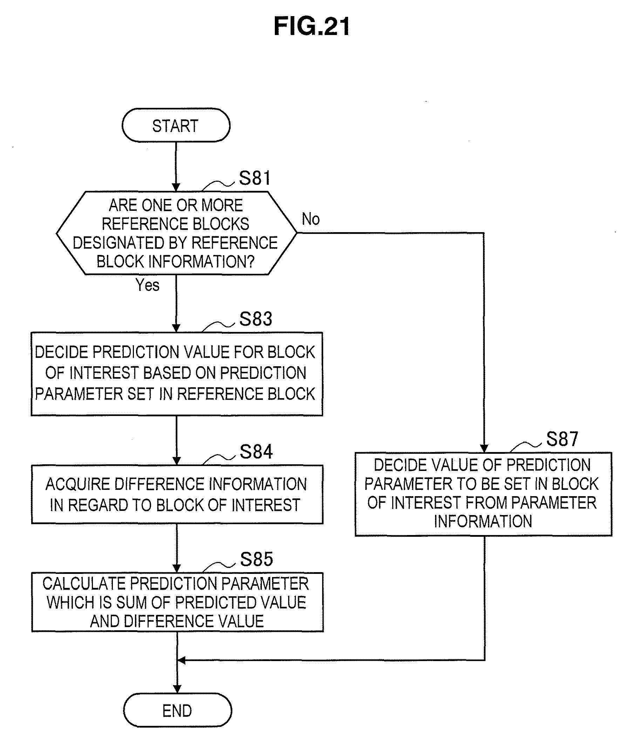

FIG. 21 is a flowchart showing a flow example of a prediction parameter generation process shown in FIG. 20.

Referring to FIG. 21, the parameter setting section 93 first determines whether one or more reference blocks are designated to be referred to in the reference block information decoded in regard to the block of interest (step S81).

When one or more reference blocks are designated in the reference block information, the parameter setting section 93 decides the predicted values for the block of interest based on the prediction parameters set in the designated reference blocks (step S83). The predicted values decided herein may be the same as the values of the prediction parameters set in any reference block or may be average values of the prediction parameters set in the plurality of reference blocks. Next, the parameter setting section 93 acquires the difference information decoded in regard to the block of interest (step S84). Next, the parameter setting section 93 calculates the prediction parameters to be set in the block of interest by adding the predicted values for the block of interest and the difference values indicated by the difference information (step S85).

Conversely, when any reference block is not designated in the reference block information, the parameter setting section 93 decides the values of the prediction parameters to be set in the block of interest from the parameter information generated without use of the prediction encoding (step S87).

In the first embodiment, the prediction parameters generated as the result of such a process are set in each of the blocks in which the adaptive parameter mode is designated.

[5-3. Color Gamut Conversion Process (Second Embodiment)]

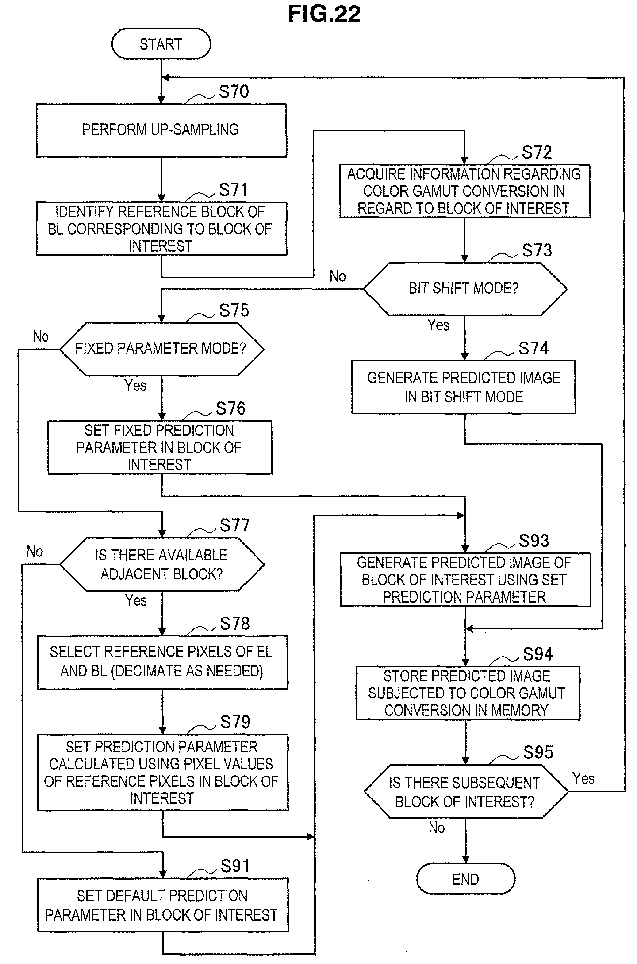

FIG. 22 is a flowchart illustrating a flow example of the color gamut conversion process for decoding according to the second embodiment. The color gamut conversion process described herein can be performed on each of the blocks included in the picture, the slice, or the tile.

Referring to FIG. 22, the up-sampling section 91 first up-samples the image of the base layer acquired from the common memory 7 according to a resolution ratio between the base layer and the enhancement layer (step S70).

The prediction section 92 identifies a corresponding block of the base layer corresponding to the block of interest of the enhancement layer (step S71). The prediction section 92 acquires the information regarding the color gamut conversion decoded in regard to the block of interest by the lossless decoding section 62 (step S72).

The process branches thereafter depending on the prediction mode indicated by the acquired prediction mode information. When the prediction mode information indicates the bit shift mode (step S73), the prediction section 92 performs the color gamut prediction in the bit shift mode to generate the predicted image of the block of interest (step S74).

When the prediction mode information indicates the fixed parameter mode (step S75), the prediction section 92 sets the fixed prediction parameters in the block of interest (step S76). When the prediction mode information indicates the adaptive parameter mode, the parameter setting section 98 determines whether there is an available adjacent block in regard to the block of interest (step S77). When there is an available adjacent block, the parameter setting section 98 selects the reference pixels of one or more adjacent blocks of the enhancement layer and the corresponding blocks of the base layer corresponding to the adjacent blocks (step S78). Here, the parameter setting section 98 may decimate the reference pixels of the reference blocks. Then, the parameter setting section 98 calculates the optimum prediction parameters of the block of interest using the pixel values of the selected reference pixels and sets the calculated prediction parameters in the block of interest (step S79). Conversely, when there is no available adjacent block, the parameter setting section 98 sets default prediction parameters in the block of interest (step S91). The prediction section 92 performs the color gamut prediction using the prediction parameters set in the block of interest to generate the predicted image of the block of interest (step S93).

Then, the prediction section 92 stores the predicted image subjected to the color gamut conversion in the frame memory 69 (step S94). Thereafter, when there is a subsequent unprocessed block of interest, the process returns to step S70 and the above-described processes are repeated on the subsequent block of interest (step S95). When there is no subsequent unprocessed block of interest, the color gamut conversion process shown in FIG. 20 ends.

<6. Applications>

[6-1. Application to Various Commodities]

The image encoding device 10 and the image decoding device 60 according to the embodiment may be applied to various electronic devices such as transmitters and receivers for satellite broadcasting, cable broadcasting such as cable TV, distribution on the Internet, distribution to terminals via cellular communication and the like, recording devices that record images in a medium such as optical discs, magnetic disks and flash memory, and reproduction devices that reproduce images from such storage medium. Four applications will be described below.

(1) First Application

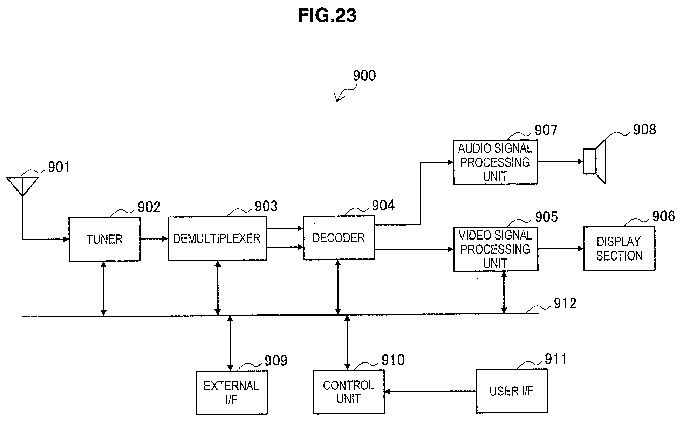

FIG. 23 illustrates an example of a schematic configuration of a television device to which the embodiment is applied. A television device 900 includes an antenna 901, a tuner 902, a demultiplexer 903, a decoder 904, an video signal processing section 905, a display section 906, an audio signal processing section 907, a speaker 908, an external interface 909, a control section 910, a user interface 911, and a bus 912.

The tuner 902 extracts a signal of a desired channel from broadcast signals received via the antenna 901, and demodulates the extracted signal. The tuner 902 then outputs an encoded bit stream obtained through the demodulation to the demultiplexer 903. That is, the tuner 902 serves as a transmission means of the television device 900 for receiving an encoded stream in which an image is encoded.

The demultiplexer 903 demultiplexes the encoded bit stream to obtain a video stream and an audio stream of a program to be viewed, and outputs each stream obtained through the demultiplexing to the decoder 904. The demultiplexer 903 also extracts auxiliary data such as electronic program guides (EPGs) from the encoded bit stream, and supplies the extracted data to the control section 910. Additionally, the demultiplexer 903 may perform descrambling when the encoded bit stream has been scrambled.

The decoder 904 decodes the video stream and the audio stream input from the demultiplexer 903. The decoder 904 then outputs video data generated in the decoding process to the video signal processing section 905. The decoder 904 also outputs the audio data generated in the decoding process to the audio signal processing section 907.

The video signal processing section 905 reproduces the video data input from the decoder 904, and causes the display section 906 to display the video. The video signal processing section 905 may also cause the display section 906 to display an application screen supplied via a network. Further, the video signal processing section 905 may perform an additional process such as noise removal, for example, on the video data in accordance with the setting. Furthermore, the video signal processing section 905 may generate an image of a graphical user interface (GUI) such as a menu, a button and a cursor, and superimpose the generated image on an output image.

The display section 906 is driven by a drive signal supplied from the video signal processing section 905, and displays a video or an image on a video screen of a display device (e.g. liquid crystal display, plasma display, OLED, etc.).

The audio signal processing section 907 performs a reproduction process such as D/A conversion and amplification on the audio data input from the decoder 904, and outputs a sound from the speaker 908. The audio signal processing section 907 may also perform an additional process such as noise removal on the audio data.

The external interface 909 is an interface for connecting the television device 900 to an external device or a network. For example, a video stream or an audio stream received via the external interface 909 may be decoded by the decoder 904. That is, the external interface 909 also serves as a transmission means of the television device 900 for receiving an encoded stream in which an image is encoded.

The control section 910 includes a processor such as a central processing unit (CPU), and a memory such as random access memory (RAM) and read only memory (ROM). The memory stores a program to be executed by the CPU, program data, EPG data, data acquired via a network, and the like. The program stored in the memory is read out and executed by the CPU at the time of activation of the television device 900, for example. The CPU controls the operation of the television device 900, for example, in accordance with an operation signal input from the user interface 911 by executing the program.

The user interface 911 is connected to the control section 910. The user interface 911 includes, for example, a button and a switch used for a user to operate the television device 900, and a receiving section for a remote control signal. The user interface 911 detects an operation of a user via these structural elements, generates an operation signal, and outputs the generated operation signal to the control section 910.

The bus 912 connects the tuner 902, the demultiplexer 903, the decoder 904, the video signal processing section 905, the audio signal processing section 907, the external interface 909, and the control section 910 to each other.

The decoder 904 has a function of the image decoding device 60 according to the embodiment in the television device 900 configured in this manner. Thus, when the television device 900 performs the color gamut prediction on the layers with mutually different color gamuts, it is possible to prevent the accuracy of the color gamut prediction from deteriorating due to the region of the image.

(2) Second Application

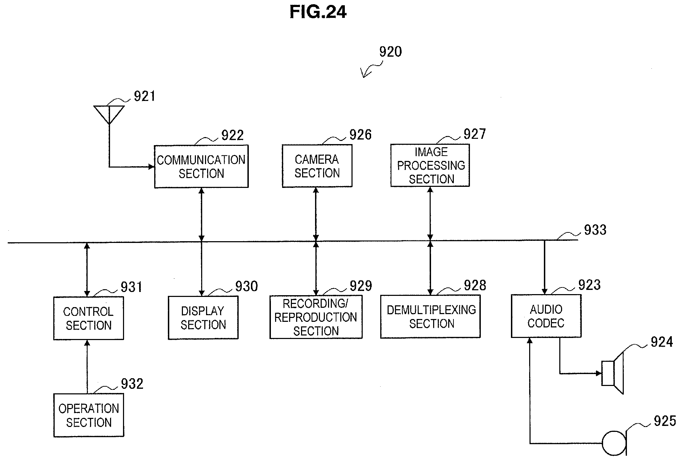

FIG. 24 illustrates an example of a schematic configuration of a mobile phone to which the embodiment is applied. A mobile phone 920 includes an antenna 921, a communication section 922, an audio codec 923, a speaker 924, a microphone 925, a camera section 926, an image processing section 927, a demultiplexing section 928, a recording/reproduction section 929, a display section 930, a control section 931, an operation section 932, and a bus 933.

The antenna 921 is connected to the communication section 922. The speaker 924 and the microphone 925 are connected to the audio codec 923. The operation section 932 is connected to the control section 931. The bus 933 connects the communication section 922, the audio codec 923, the camera section 926, the image processing section 927, the demultiplexing section 928, the recording/reproduction section 929, the display section 930, and the control section 931 to each other.

The mobile phone 920 performs an operation such as transmission and reception of an audio signal, transmission and reception of email or image data, image capturing, and recording of data in various operation modes including an audio call mode, a data communication mode, an image capturing mode, and a videophone mode.

An analogue audio signal generated by the microphone 925 is supplied to the audio codec 923 in the audio call mode. The audio codec 923 converts the analogue audio signal into audio data, has the converted audio data subjected to the A/D conversion, and compresses the converted data. The audio codec 923 then outputs the compressed audio data to the communication section 922. The communication section 922 encodes and modulates the audio data, and generates a transmission signal. The communication section 922 then transmits the generated transmission signal to a base station (not illustrated) via the antenna 921. The communication section 922 also amplifies a wireless signal received via the antenna 921 and converts the frequency of the wireless signal to acquire a received signal. The communication section 922 then demodulates and decodes the received signal, generates audio data, and outputs the generated audio data to the audio codec 923. The audio codec 923 extends the audio data, has the audio data subjected to the D/A conversion, and generates an analogue audio signal. The audio codec 923 then supplies the generated audio signal to the speaker 924 to output a sound.

The control section 931 also generates text data in accordance with an operation made by a user via the operation section 932, the text data, for example, composing email. Moreover, the control section 931 causes the display section 930 to display the text. Furthermore, the control section 931 generates email data in accordance with a transmission instruction from a user via the operation section 932, and outputs the generated email data to the communication section 922. The communication section 922 encodes and modulates the email data, and generates a transmission signal. The communication section 922 then transmits the generated transmission signal to a base station (not illustrated) via the antenna 921. The communication section 922 also amplifies a wireless signal received via the antenna 921 and converts the frequency of the wireless signal to acquire a received signal. The communication section 922 then demodulates and decodes the received signal to restore the email data, and outputs the restored email data to the control section 931. The control section 931 causes the display section 930 to display the content of the email, and also causes the storage medium of the recording/reproduction section 929 to store the email data.

The recording/reproduction section 929 includes a readable and writable storage medium. For example, the storage medium may be a built-in storage medium such as RAM and flash memory, or an externally mounted storage medium such as hard disks, magnetic disks, magneto-optical disks, optical discs, USB memory, and memory cards.

Furthermore, the camera section 926, for example, captures an image of a subject to generate image data, and outputs the generated image data to the image processing section 927 in the image capturing mode. The image processing section 927 encodes the image data input from the camera section 926, and causes the storage medium of the recording/reproduction section 929 to store the encoded stream.

Furthermore, the demultiplexing section 928, for example, multiplexes a video stream encoded by the image processing section 927 and an audio stream input from the audio codec 923, and outputs the multiplexed stream to the communication section 922 in the videophone mode. The communication section 922 encodes and modulates the stream, and generates a transmission signal. The communication section 922 then transmits the generated transmission signal to a base station (not illustrated) via the antenna 921. The communication section 922 also amplifies a wireless signal received via the antenna 921 and converts the frequency of the wireless signal to acquire a received signal. These transmission signal and received signal may include an encoded bit stream. The communication section 922 then

EP 3 021 585 A1

demodulates and decodes the received signal to restore the stream, and outputs the restored stream to the demultiplexing section 928. The demultiplexing section 928 demultiplexes the input stream to obtain a video stream and an audio stream, and outputs the video stream to the image processing section 927 and the audio stream to the audio codec 923. The image processing section 927 decodes the video stream, and generates video data. The video data is supplied to the display section 930, and a series of images is displayed by the display section 930. The audio codec 923 extends the audio stream, has the audio stream subjected to the D/A conversion, and generates an analogue audio signal. The audio codec 923 then supplies the generated audio signal to the speaker 924, and causes a sound to be output.

The image processing section 927 has a function of the image encoding device 10 and the image decoding device 60 according to the embodiment in the mobile phone 920 configured in this manner. Thus, when the mobile phone 920 performs the color gamut prediction on the layers with mutually different color gamuts, it is possible to prevent the accuracy of the color gamut prediction from deteriorating due to the region of the image.


(3) Third Application

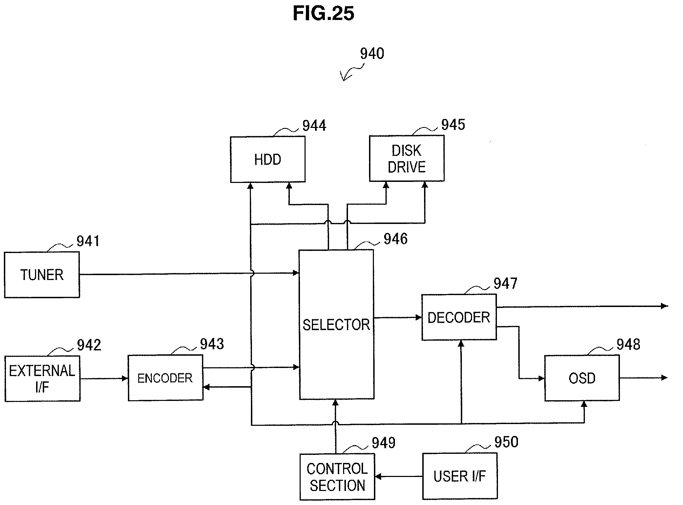

FIG. 25 illustrates an example of a schematic configuration of a recording/reproduction device to which the embodiment is applied. A recording/reproduction device 940, for example, encodes audio data and video data of a received broadcast program and records the encoded audio data and the encoded video data in a recording medium. For example, the recording/reproduction device 940 may also encode audio data and video data acquired from another device and record the encoded audio data and the encoded video data in a recording medium. Furthermore, the recording/reproduction device 940, for example, uses a monitor or a speaker to reproduce the data recorded in the recording medium in accordance with an instruction of a user. At this time, the recording/reproduction device 940 decodes the audio data and the video data.

The recording/reproduction device 940 includes a tuner 941, an external interface 942, an encoder 943, a hard disk drive (HDD) 944, a disc drive 945, a selector 946, a decoder 947, an on-screen display (OSD) 948, a control section 949, and a user interface 950.

The tuner 941 extracts a signal of a desired channel from broadcast signals received via an antenna (not shown), and demodulates the extracted signal. The tuner 941 then outputs an encoded bit stream obtained through the demodulation to the selector 946. That is, the tuner 941 serves as a transmission means of the recording/reproduction device 940.

The external interface 942 is an interface for connecting the recording/reproduction device 940 to an external device or a network. For example, the external interface 942 may be an IEEE 1394 interface, a network interface, an USB interface, a flash memory interface, or the like. For example, video data and audio data received via the external interface 942 are input to the encoder 943. That is, the external interface 942 serves as a transmission means of the recording/reproduction device 940.

When the video data and the audio data input from the external interface 942 have not been encoded, the encoder 943 encodes the video data and the audio data. The encoder 943 then outputs an encoded bit stream to the selector 946.

The HDD 944 records, in an internal hard disk, the encoded bit stream in which content data of a video and a sound is compressed, various programs, and other pieces of data. The HDD 944 also reads out these pieces of data from the hard disk at the time of reproducing a video or a sound.

The disc drive 945 records and reads out data in a recording medium that is mounted. The recording medium that is mounted on the disc drive 945 may be, for example, a DVD disc (DVD-Video, DVD-RAM, DVD-R, DVD-RW, a DVD+R, DVD+RW, etc.), a Blu-ray (registered trademark) disc, or the like.

The selector 946 selects, at the time of recording a video or a sound, an encoded bit stream input from the tuner 941 or the encoder 943, and outputs the selected encoded bit stream to the HDD 944 or the disc drive 945. The selector 946 also outputs, at the time of reproducing a video or a sound, an encoded bit stream input from the HDD 944 or the disc drive 945 to the decoder 947.

The decoder 947 decodes the encoded bit stream, and generates video data and audio data. The decoder 947 then outputs the generated video data to the OSD 948. The decoder 904 also outputs the generated audio data to an external speaker.

The OSD 948 reproduces the video data input from the decoder 947, and displays a video. The OSD 948 may also superimpose an image of a GUI such as a menu, a button, and a cursor on a displayed video.

The control section 949 includes a processor such as a CPU, and a memory such as RAM and ROM. The memory stores a program to be executed by the CPU, program data, and the like. For example, a program stored in the memory is read out and executed by the CPU at the time of activation of the recording/reproduction device 940. The CPU controls the operation of the recording/reproduction device 940, for example, in accordance with an operation signal input from the user interface 950 by executing the program.

The user interface 950 is connected to the control section 949. The user interface 950 includes, for example, a button and a switch used for a user to operate the recording/reproduction device 940, and a receiving section for a remote control signal. The user interface 950 detects an operation made by a user via these structural elements, generates an operation signal, and outputs the generated operation signal to the control section 949.

The encoder 943 has a function of the image encoding device 10 according to the embodiment in the recording/reproduction device 940 configured in this manner. The decoder 947 also has a function of the image decoding device 60 according to the embodiment. Thus, when the recording/reproduction device 940 performs the color gamut prediction on the layers with mutually different color gamuts, it is possible to prevent the accuracy of the color gamut prediction from deteriorating due to the region of the image.

(4) Fourth Application

FIG. 26 illustrates an example of a schematic configuration of an image capturing device to which the embodiment is applied. An image capturing device 960 captures an image of a subject to generate an image, encodes the image data, and records the image data in a recording medium.

The image capturing device 960 includes an optical block 961, an image capturing section 962, a signal processing section 963, an image processing section 964, a display section 965, an external interface 966, a memory 967, a media drive 968, an OSD 969, a control section 970, a user interface 971, and a bus 972.

The optical block 961 is connected to the image capturing section 962. The image capturing section 962 is connected to the signal processing section 963. The display section 965 is connected to the image processing section 964. The user interface 971 is connected to the control section 970. The bus 972 connects the image processing section 964, the external interface 966, the memory 967, the media drive 968, the OSD 969, and the control section 970 to each other.

The optical block 961 includes a focus lens, an aperture stop mechanism, and the like. The optical block 961 forms an optical image of a subject on an image capturing surface of the image capturing section 962. The image capturing section 962 includes an image sensor such as a CCD and CMOS, and converts the optical image formed on the image capturing surface into an image signal which is an electrical signal through photoelectric conversion. The image capturing section 962 then outputs the image signal to the signal processing section 963.

The signal processing section 963 performs various camera signal processes such as knee correction, gamma correction, and color correction on the image signal input from the image capturing section 962. The signal processing section 963 outputs the image data subjected to the camera signal process to the image processing section 964.

The image processing section 964 encodes the image data input from the signal processing section 963, and generates encoded data. The image processing section 964 then outputs the generated encoded data to the external interface 966 or the media drive 968. The image processing section 964 also decodes encoded data input from the external interface 966 or the media drive 968, and generates image data. The image processing section 964 then outputs the generated image data to the display section 965. The image processing section 964 may also output the image data input from the signal processing section 963 to the display section 965, and cause the image to be displayed. Furthermore, the image processing section 964 may superimpose data for display acquired from the OSD 969 on an image to be output to the display section 965.

The OSD 969 generates an image of a GUI such as a menu, a button, and a cursor, and outputs the generated image to the image processing section 964.

The external interface 966 is configured, for example, as an USB input/output terminal. The external interface 966 connects the image capturing device 960 and a printer, for example, at the time of printing an image. A drive is further connected to the external interface 966 as needed. A removable medium such as magnetic disks and optical discs is mounted on the drive, and a program read out from the removable medium may be installed in the image capturing device 960. Furthermore, the external interface 966 may be configured as a network interface to be connected to a network such as a LAN and the Internet. That is, the external interface 966 serves as a transmission means of the image capturing device 960.

A recording medium to be mounted on the media drive 968 may be a readable and writable removable medium such as magnetic disks, magneto-optical disks, optical discs, and semiconductor memory. The recording medium may also be fixedly mounted on the media drive 968, configuring a non-transportable storage section such as built-in hard disk drives or a solid state drives (SSDs).

The control section 970 includes a processor such as a CPU, and a memory such as RAM and ROM. The memory stores a program to be executed by the CPU, program data, and the like. A program stored in the memory is read out and executed by the CPU, for example, at the time of activation of the image capturing device 960. The CPU controls the operation of the image capturing device 960, for example, in accordance with an operation signal input from the user interface 971 by executing the program.

The user interface 971 is connected to the control section 970. The user interface 971 includes, for example, a button, a switch, and the like used for a user to operate the image capturing device 960. The user interface 971 detects an operation made by a user via these structural elements, generates an operation signal, and outputs the generated operation signal to the control section 970.

In the image capturing device 960 having such a configuration, the image processing section 964 has the functions of the image encoding device 10 and the image decoding device 60 according to the above-described embodiment. Thus, when the image capturing device 960 performs the color gamut prediction on the layers with mutually different color gamuts, it is possible to prevent the accuracy of the color gamut prediction from deteriorating due to the region of the image.

[6-2. Various Uses of Scalable Video Coding]

The advantages of the above-described scalable video coding can be obtained in various uses. Examples of three uses will be described below.

(1) First Example

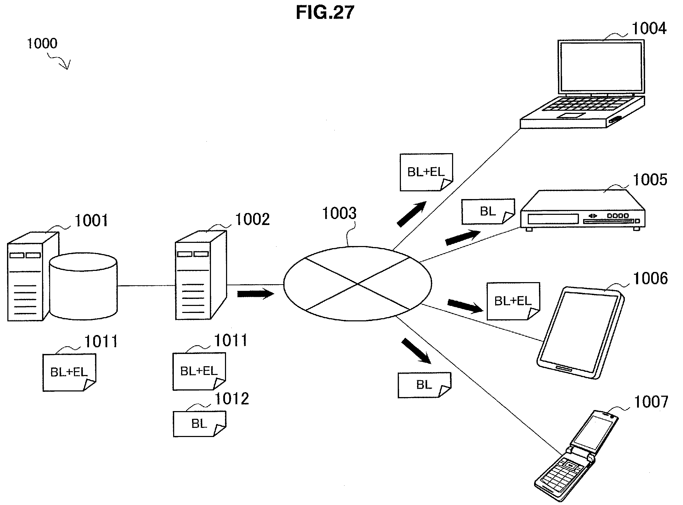

In a first example, the scalable video coding is used to selectively transmit data. Referring to FIG. 27, a data transmission system 1000 includes a stream storage device 1001 and a distribution server 1002. The distribution server 1002 is connected to several terminal devices via a network 1003. The network 1003 may be a wired network, a wireless network, or may be a combination of the wired and wireless networks. FIG. 27 illustrates a personal computer (PC) 1004, an AV device 1005, a tablet device 1006, and a mobile phone 1007 as examples of the terminal devices.

The stream storage device 1001 stores, for example, stream data 1011 including a multiplexed stream generated by the image encoding device 10. The multiplexed stream includes an encoded stream of the base layer (BL) and an encoded stream of the enhancement layer (EL). The distribution server 1002 reads the stream data 1011 stored in the stream storage device 1001 and distributes at least a part of the read stream data 1011 to the PC 1004, the AV device 1005, the tablet device 1006, and the mobile phone 1007 via the network 1003.

When the stream is distributed to the terminal device, the distribution server 1002 selects the stream to be distributed based on a certain condition such as the performance of the terminal device or a communication environment. For example, the distribution server 1002 may not distribute the encoded stream with high image quality exceeding image quality which can be handled by the terminal device to avoid occurrence of delay or overflow in the terminal device or overload of a processor. The distribution server 1002 may not distribute the encoded stream with high image quality to avoid occupation of a communication band of the network 1003. On the other hand, when there is no risk to avoid or when it is determined that distribution is appropriate based on a contract with a user or a certain condition, the distribution server 1002 may distribute the entire multiplexed stream to the terminal device.

In the example of FIG. 27, the distribution server 1002 reads the stream data 1011 from the stream storage device 1001. The distribution server 1002 distributes the stream data 1011 to the PC 1004 with high processing performance without change. Since the AV device 1005 has low processing performance, the distribution server 1002 generates stream data 1012 including only the encoded stream of the base layer extracted from the stream data 1011 and distributes the stream data 1012 to the AV device 1005. The distribution server 1002 distributes the stream data 1011 to the tablet device 1006 capable of performing communication at a high communication rate without change. Since the mobile phone 1007 can perform communication only at a low communication rate, the distribution server 1002 distributes the stream data 1012 including only the encoded stream of the base layer to the mobile phone 1007.

By using the multiplexed stream in this way, it is possible to adaptively adjust an amount of traffic to be transmitted. The encoding amount of the stream data 1011 is reduced more than when each layer is encoded by itself. Therefore, even when all of the stream data 1011 is distributed, the load on the network 1003 is suppressed. Further, memory resources of the stream storage device 1001 are saved.

The hardware performance of the terminal device is different depending on a device. The capability of an application executed by the terminal devices is also diverse. The communication capacity of the network 1003 is also diverse. A capacity which can be used to transmit data can vary from moment to moment due to the presence of other traffic. Thus, before start of the distribution of the stream data, the distribution server 1002 may acquire terminal information regarding the hardware performance of the terminal device, the capability of an application, or the like and network information regarding a communication capacity of the network 1003 through signaling with the terminal device of a distribution destination. Then, the distribution server 1002 can select the stream to be distributed based on the acquired information.

The layer to be decoded may be extracted in the terminal device. For example, the PC 1004 may display a base layer image extracted and decoded from the received multiplexed stream on its screen. The PC 1004 may extract the encoded stream of the base layer from the received multiplexed stream and generate the stream data 1012 to store the stream data 1012 in a storage medium or transmit the generated stream data 1012 to another device.

The configuration of the data transmission system 1000 illustrated in FIG. 27 is merely an example. The data transmission system 1000 may include any number of the stream storage devices 1001, the distribution servers 1002, the networks 1003, and the terminal devices.

(2) Second Example

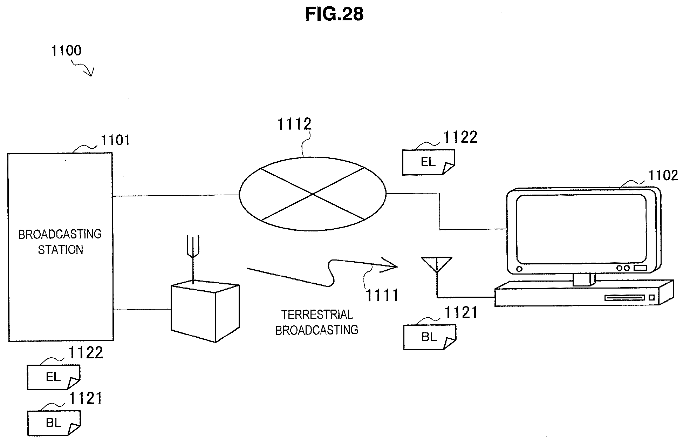

In a second example, the scalable video coding is used to transmit data via a plurality of communication channels. Referring to FIG. 28, a data transmission system 1100 includes a broadcasting station 1101 and a terminal device 1102. The broadcasting station 1101 broadcasts an encoded stream 1121 of a base layer on a terrestrial channel 1111. The broadcasting station 1101 transmits an encoded stream 1122 of an enhancement layer to the terminal device 1102 via a network 1112.

The terminal device 1102 has a reception function to receive terrestrial broadcasting broadcasted by the broadcasting station 1101 and receives the encoded stream 1121 of the base layer via the terrestrial channel 1111. The terminal device 1102 has a communication function to communicate with the broadcasting station 1101 and receives the encoded stream 1122 of the enhancement layer via the network 1112.

For example, the terminal device 1102 may receive the encoded stream 1121 of the base layer in response to an instruction from a user, decode the base layer image from the received encoded stream 1121, and display the base layer image on the screen. The terminal device 1102 may store the decoded base layer image in a storage medium or transmit the decoded base layer image to another device.

For example, the terminal device 1102 may receive the encoded stream 1122 of the enhancement layer via the network 1112 in response to an instruction from a user and multiplex the encoded stream 1121 of the base layer and the encoded stream 1122 of the enhancement layer to generate a multiplexed stream. The terminal device 1102 may decode the enhancement layer image from the encoded stream 1122 of the enhancement layer and display the enhancement layer image on the screen. The terminal device 1102 may store the decoded enhancement layer image in a storage medium or transmit the decoded enhancement layer image to another device.

As described above, the encoded streams of the layers included in the multiplexed stream can be transmitted via different communication channels for each layer. Thus, it is possible to disperse the load on the individual channels and suppress delay of the communication or occurrence of overflow.

A communication channel to be used for transmission may be dynamically selected according to a certain condition. For example, the encoded stream 1121 of the base layer with a relatively large data amount can be transmitted via a communication channel with a broad bandwidth and the encoded stream 1122 of the enhancement layer with a relatively small data amount can be transmitted via a communication channel with a narrow bandwidth. The communication channel via which the encoded stream 1122 of a specific layer is transmitted may be switched according to the bandwidth of the communication channel. Thus, it is possible to suppress the load on the individual channel more efficiently.

The configuration of the data transmission system 1100 illustrated in FIG. 28 is merely an example. The data transmission system 1100 may include any number of the communication channels and the terminal devices. The configuration of the system described herein may also be used in uses other than the broadcasting.

(3) Third Example

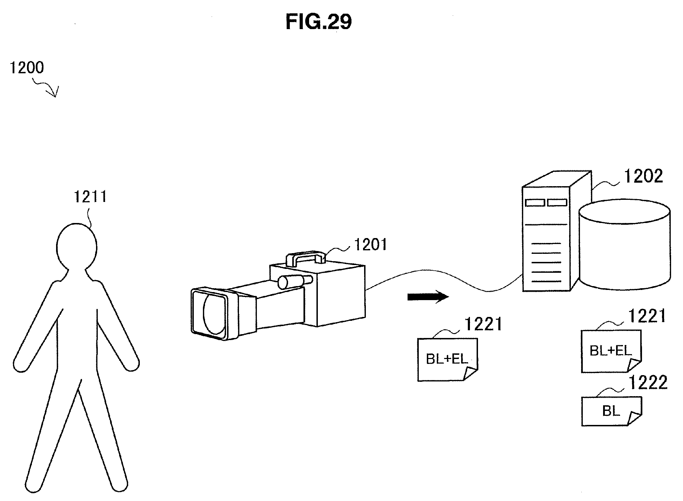

In a third example, the scalable video coding is used to store a video. Referring to FIG. 29, a data transmission system 1200 includes an imaging device 1201 and a stream storage device 1202. The imaging device 1201 performs scalable video encoding on image data generated by imaging a subject 1211 and generates a multiplexed stream 1221. The multiplexed stream 1221 includes an encoded stream of a base layer and an encoded stream of an enhancement layer. The imaging device 1201 supplies the multiplexed stream 1221 to the stream storage device 1202.

The stream storage device 1202 stores the multiplexed stream 1221 supplied from the imaging device 1201 so that the multiplexed stream 1221 has different image quality for each mode. For example, in a normal mode, the stream storage device 1202 extracts an encoded stream 1222 of the base layer from the multiplexed stream 1221 and stores the extracted encoded stream 1222 of the base layer. On the other hand, in a high image quality mode, the stream storage device 1202 stores the multiplexed stream 1221 without change. Thus, the stream storage device 1202 can record a high image quality stream with a large data amount only when it is desirable to record a video with high image quality. Therefore, it is possible to save memory resources while suppressing an influence of deterioration in image quality on a user.

For example, the imaging device 1201 is assumed to be a monitoring camera. When a monitoring target (for example, an intruder) is not pictured in a captured image, a normal mode is selected. In this case, since there is a high probability of the captured image being unimportant, a reduction in the amount of data is preferred and a low-quality video is recorded (that is, only the encoded stream 1222 of the base layer is stored). On the other hand, when the monitoring target (for example, the subject 1211 which is the intruder) is pictured as in a captured image, a high image quality mode is selected. In this case, since there is a high probability of the captured image being important, image quality is preferred and a high-quality video is recorded (that is, the multiplexed stream 1221 is stored).

In the example of FIG. 29, for example, the mode is selected based on an image analysis result by the stream storage device 1202. However, the present disclosure is not limited to this example, but the imaging device 1201 may select the mode. In the latter case, the imaging device 1201 may supply the encoded stream 1222 of the base layer to the stream storage device 1202 in the normal mode and supply the multiplexed stream 1221 to the stream storage device 1202 in the high image quality mode.

Any criterion may be used as a selection criterion for selecting the mode. For example, the mode may be switched according to the magnitude of audio, the waveform of audio, or the like acquired through a microphone. The mode may also be switched periodically. The mode may also be switched according to an instruction from a user. The number of selectable modes may be any number as long as the number of modes does not exceed the number of hierarchized layers.

The configuration of the data transmission system 1200 illustrated in FIG. 29 is merely an example. The data transmission system 1200 may include any number of imaging devices 1201. The configuration of the system described herein may also be used in uses other than the monitoring camera.

[6-3. Application to Other Codecs]

(1) Application to Multi-view Codec

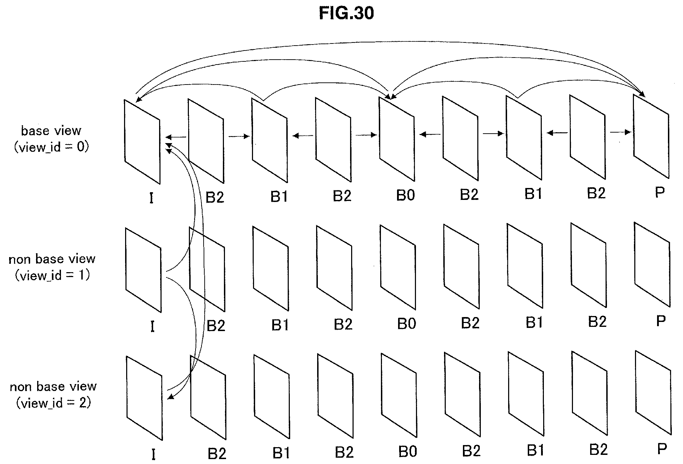

A multi-view codec is a kind of a multilayer codec and is an image encoding scheme for encoding and decoding a so-called multi-view video. FIG. 30 is an explanatory diagram illustrating the multi-view codec. Referring to FIG. 30, sequences of frames of three views captured at three time points are shown. A view ID (view_id) is assigned to each view. Any one view of the plurality of views is designated as a base view. The views other than the base view are referred to as non-base views. In the example of FIG. 30, a view with a view ID of "0" is a base view and two views with view IDs of "1" and "2" are non-base views. When these views are hierarchically encoded, the views can correspond to layers. As indicated by arrows in the drawing, images of the non-base views are encoded and decoded with reference to images of the base views (images of the other base-base view are referred to).

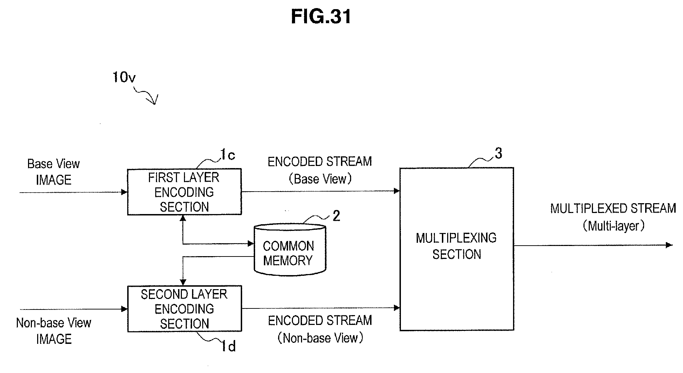

FIG. 31 is a block diagram showing a schematic configuration of an image encoding device 10v supporting a multi-view codec. Referring to FIG. 31, the image encoding device 10v includes a first layer encoding section 1c, a second layer encoding section 1d, a common memory 2, and a multiplexing section 3.

A function of the first layer encoding section 1c is the same as the function of the BL encoding section 1a described with reference to FIG. 4 except that base view images are received as an input instead of the base layer images. The first layer encoding section 1c encodes the base view images to generate an encoded stream of a first layer. A function of the second layer encoding section 1d is the same as the function of the EL encoding section 1b described with reference to FIG. 4 except that the non-base view images are received as an input instead of the enhancement layer images. The second layer encoding section 1d encodes the non-base view images to generate an encoded stream of a second layer. The common memory 2 stores information commonly used between the layers. The multiplexing section 3 multiplexes the encoded stream of the first layer generated by the first layer encoding section 1c and the encoded stream of the second layer generated by the second layer encoding section 1d to generate a multiplexed multilayer stream.

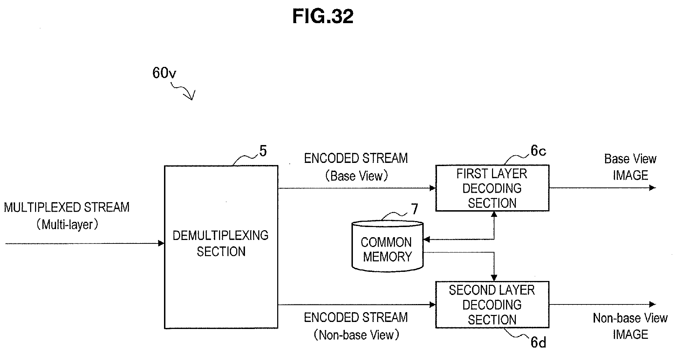

FIG. 32 is a block diagram showing a schematic configuration of an image decoding device 60v supporting the multi-view codec. Referring to FIG. 32, the image decoding device 60v includes a demultiplexing section 5, a first layer decoding section 6c, a second layer decoding section 6d, and a common memory 7.

The demultiplexing section 5 demultiplexes the multiplexed multilayer stream into the encoded stream of the first layer and the encoded stream of the second layer. A function of the first layer decoding section 6c is the same as the function of the BL decoding section 6a described with reference to FIG. 5 except that the encoded stream obtained by encoding the base view images is received as an input instead of the base layer images. The first layer decoding section 6c decodes the base view images from the encoded stream of the first layer. A function of the second layer decoding section 6d is the same as the function of the EL decoding section 6b described with reference to FIG. 5 except that the encoded stream obtained by encoding the non-base view images is received as an input instead of the enhancement layer images. The second layer decoding section 6d decodes the non-base view images from the encoded stream of the second layer. The common memory 7 stores information used commonly between the layers.

When the color gamut differs between the views at the time of the encoding or decoding of the multi-view image data, the conversion of the color gamut between the views may be controlled according to the technology of the present disclosure. Thus, as in the case of the scalable video coding, it is possible to prevent the prediction accuracy from deteriorating due to the region of an image at the time of the prediction of the color gamut even in the multi-view codec.

(2) Application to Streaming Technology

The technology of the present disclosure may be applied to streaming protocols. For example, in MPEG-Dynamic Adaptive Streaming over HTTP (DASH), a plurality of encoded streams with different parameters such as resolutions are prepared in advance in a streaming server. The streaming server dynamically selects data appropriate for streaming from the plurality of encoded streams in units of segments and distributes the selected data. In such a streaming protocol, the prediction of the color gamut between the encoded streams may be controlled according to the technology of the present disclosure.

[6-4. Various Mounting Levels]

For example, the technology of the present disclosure may be realized in various mounting levels such as a processor of a system large scale integration (LSI), a module using a plurality of processors, a unit using a plurality of modules, and a set in which other functions are added to a unit.

(1) Video Set

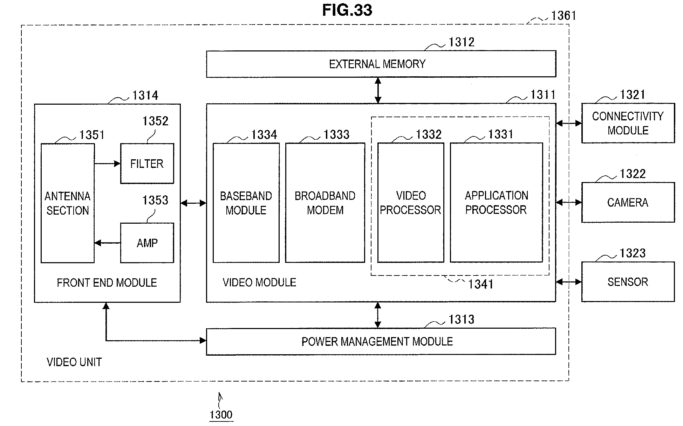

An example of a case in which the technology of the present disclosure is realized as a set will be described with reference to FIG. 33. FIG. 33 is a block diagram showing an example of the schematic configuration of a video set.

In recent years, electronic devices have been multi-functionalized. Development and manufacturing of electronic devices are performed for each individual function, and then a step of integrating the plurality of functions is performed. Accordingly, some business manufacturers manufacture and sell only parts of electronic devices. The business manufacturers provide constituent elements having a single function or a plurality of mutually associated functions or provide sets having an integrated function group. A video set 1300 illustrated in FIG. 33 is a set that comprehensively includes constituent elements encoding and decoding an image (or merely performing one of the encoding and the decoding) and constituent elements having different functions associated with the functions of the constituent elements.

Referring to FIG. 33, the video set 1300 includes a module group including a video module 1311, an external memory 1312, a power management module 1313, and a front end module 1314 and a device group for relevant functions including a connectivity module 1321, a camera 1322, a sensor 1323, and the like.

The module is a constituent element formed by aggregating components for several mutually associated functions. The module may have any physical configuration. For example, the module can be formed by disposing a plurality of processors with the same or different functions, electronic circuit elements such as resistors and capacitors, and other devices on a circuit substrate in an integrated manner. A separate module may be formed by combining another module, a processor, or the like with a module.

In the example of FIG. 33, components for functions relevant to image processing are aggregated in the video module 1311. The video module 1311 includes an application processor 1331, a video processor 1332, a broadband modem 1333, and a baseband module 1334.

The processor may be, for example, a system on a chip (SOC) or a system large scale integration (LSI). The SoC or the system LSI may include hardware on which a predetermined logic is mounted. The SoC or the system LSI may include a CPU and a non-transitory tangible medium that stores a program causing the CPU to execute a predetermined function. For example, the program can be stored in a ROM and is read to a random access memory (RAM) at the time of execution to be executed by the CPU.

The application processor 1331 is a processor that executes an application relevant to image processing. An application executed by the application processor 1331 may control, for example, the video processor 1332 and other constituent elements in addition to certain calculation for image processing. The video processor 1332 is a processor that has a function relevant to image encoding and decoding. The application processor 1331 and the video processor 1332 may be integrated into one processor (see a dotted line 1341 in the drawing).

The broadband modem 1333 is a module that performs a process relevant to communication via a network such as the Internet or a public switched telephone network. For example, the broadband modem 1333 performs digital modulation to convert a digital signal including transmitted data into an analog signal and digital demodulation to convert an analog signal including received data into a digital signal. For example, the transmitted data and the received data processed by the broadband modem 1333 can include any information such as image data, an encoded stream of image data, application data, an application program, and setting data.

The baseband module 1334 is a module that performs baseband processing on a radio frequency (RF) signal transmitted and received via the front end module 1314. For example, the baseband module 1334 modulates a transmitted baseband signal including transmitted data, converts the frequency of the signal into the frequency of an RF signal, and outputs the RF signal to the front end module 1314. The baseband module 1334 converts the frequency of the RF signal input from the front end module 1314 and demodulates the RF signal to generate a received baseband signal including the received data.

The external memory 1312 is a memory device that is installed outside the video module 1311 and can be accessed from the video module 311. When large-capacity data such as video data including several frames is stored in the external memory 1312, the external memory 1312 can include, for example, a large-capacity semiconductor memory of a relatively low price, such as a dynamic random access memory (DRAM).

The power management module 1313 is a module that controls power supply to the video module 1311 and the front end module 1314.

The front end module 1314 is a module that is connected to the baseband module 1334 and supplies a front end function. In the example of FIG. 33, the front end module 1314 includes an antenna section 1351, a filter 1352, and an application section 1353. The antenna section 1351 includes one or more antenna elements transmitting or receiving a radio signal and a relevant constituent element such as an antenna switch. The antenna section 1351 transmits an RF signal amplified by the application section 1353 as a radio signal. The antenna section 1351 outputs an RF signal received as a radio signal to the filter 1352 and causes the filter 1352 to filter the RF signal.

The connectivity module 1321 is a module that has a function relevant to external connection of the video set 1300. The connectivity module 1321 may support any external connection protocol. For example, the connectivity module 1321 may include a sub-module that supports a wireless connection protocol such as Bluetooth (registered trademark), IEEE802.11 (for example, Wi-Fi (registered trademark)), near field communication (NFC), or InfraRed Data Association (IrDA) and a corresponding antenna. The connectivity module 1321 may include a sub-module that supports a wired connection protocol such as Universal Serial Bus (USB) or High-Definition Multimedia Interface (HDMI) and a corresponding connection terminal.

The connectivity module 1321 may include a drive that records data on and reads data from a storage medium such as a magnetic disk, an optical disc, a magneto-optical disc, or a semiconductor memory or a storage device such as a solid state drive (SSD) or a network attached storage (NAS). The connectivity module 1321 may include such a storage medium or storage device. The connectivity module 1321 may provide connectivity to a display outputting an image or a speaker outputting audio.

The camera 1322 is a module that images a subject to acquire captured images. A series of captured images acquired by the camera 1322 forms video data. For example, the video data generated by the camera 1322 can be encoded by the video processor 1332 to be stored in the external memory 1312 or a storage medium connected to the connectivity module 1321, as necessary

The sensor 1323 is a module that includes one or more sensors among a GPS sensor, an audio sensor, an ultrasonic sensor, an optical sensor, an illuminance sensor, an infrared sensor, an angular velocity sensor, an angular acceleration sensor, a speed sensor, an acceleration sensor, a gyro sensor, a geomagnetic sensor, an impact sensor, and a temperature sensor. For example, sensor data generated by the sensor 1323 can be used for the application processor 1331 to execute an application.

In the video set 1300 having such a configuration, the technology of the present disclosure can be used in, for example, the video processor 1332. In this case, the video set 1300 is a set to which the technology of the present disclosure is applied.

The video set 1300 may be realized as any of the various kinds of devices processing image data. For example, the video set 1300 may correspond to the television device 900, the mobile phone 920, the recording/reproduction device 940i, or the imaging device 960 described with reference to FIGS. 23 to 26. The video set 1300 may correspond to the terminal device such as the PC 1004, the AV device 1005, the tablet device 1006, or the mobile phone 1007 in the data transmission system 1000 described with reference to FIG. 27, the broadcasting station 1101 or the terminal device 1102 in the data transmission system 1100 described with reference to FIG. 28, or the imaging device 1201 or the stream storage device 1202 in the data transmission system 1200 described with reference to FIG. 29.

(2) Video Processor

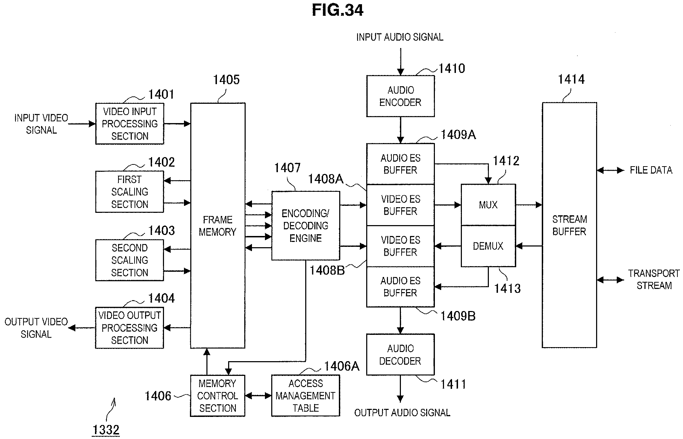

FIG. 34 is a block diagram showing an example of the schematic configuration of the video processor 1332. The video processor 1332 has a function of encoding an input video signal and an input audio signal to generate video data and audio data and a function of decoding encoded video data and audio data to generate an output video signal and an output audio signal.

Referring to FIG. 34, the video processor 1332 includes a video input processing section 1401, a first scaling section 1402, a second scaling section 1403, a video output processing section 1404, a frame memory 1405, a memory control section 1406, an encoding/decoding engine 1407, video elementary stream (ES) buffers 1408A and 1408B, audio ES buffers 1409A and 1409B, an audio encoder 1410, an audio decoder 1411, a multiplexing section (MUX) 1412, a demultiplexing section (DEMUX) 1413, and a stream buffer 1414.

The video input processing section 1401 converts a video signal input from, for example, the connectivity module 1321 into digital image data. The first scaling section 1402 performs format conversion and scaling (expansion/contraction) on the image data input from the video input processing section 1401. The second scaling section 1403 performs format conversion and scaling (expansion/contraction) on the image data to be output to the video output processing section 1404. The format conversion in the first scaling section 1402 and the second scaling section 1403 may be conversion between, for example, a 4:2:2/Y-Cb-Cr scheme and a 4:2:0/Y-Cb-Cr scheme. The video output processing section 1404 converts the digital image data into an output video signal and outputs the output video signal to, for example, the connectivity module 1321.

The frame memory 1405 is a memory device that stores image data shared by the video input processing section 1401, the first scaling section 1402, the second scaling section 1403, the video output processing section 1404, and the encoding/decoding engine 1407. The frame memory 1405 may be realized using, for example, a semiconductor memory such as a DRAM.

The memory control section 1406 controls access to the frame memory 1405 based on a synchronization signal input from the encoding/decoding engine 1407 according to an access schedule to the frame memory 1405 stored in an access management table 1406A. The access management table 1406A is updated by the memory control section 1406 depending on processes performed in the encoding/decoding engine 1407, the first scaling section 1402, the second scaling section 1403, and the like.

The encoding/decoding engine 1407 performs an encoding process of encoding the image data to generate an encoded video stream and a decoding process of decoding the image data from the encoded video stream. For example, the encoding/decoding engine 1407 encodes the image data read from the frame memory 1405 and sequentially writes the encoded video stream on the video ES buffer 1408A. For example, the encoded video stream is sequentially read from the video ES buffer 1408B and the decoded image data is written on the frame memory 1405. The encoding/decoding engine 1407 can use the frame memory 1405 as a working area in these processes. The encoding/decoding engine 1407 outputs, for example, a synchronization signal to the memory control section 1406 at a timing at which a process for each largest coding unit (LCU) starts.

The video ES buffer 1408A buffers the encoded video stream generated by the encoding/decoding engine 1407. The encoded video stream buffered by the video ES buffer 1408A is output to the multiplexing section 1412. The video ES buffer 1408B buffers the encoded video stream input from the demultiplexing section 1413. The encoded video stream buffered by the video ES buffer 1408B is output to the encoding/decoding engine 1407.

The audio ES buffer 1409A buffers an encoded audio stream generated by the audio encoder 1410. The encoded audio stream buffered by the audio ES buffer 1409A is output to the multiplexing section 1412. The audio ES buffer 1409B buffers an encoded audio stream input from the demultiplexing section 1413. The encoded audio stream buffered by the audio ES buffer 1409B is output to the audio decoder 1411.

The audio encoder 1410 converts an input audio signal input from, for example, the connectivity module 1321 into a digital audio signal and encodes the input audio signal according to, for example, an audio encoding scheme such as an MPEG audio scheme or an Audio Code number 3 (AC3) scheme. The audio encoder 1410 sequentially writes the encoded audio stream to the audio ES buffer 1409A. The audio decoder 1411 decodes the audio data from the encoded audio stream input from the audio ES buffer 1409B to convert the audio data into an analog signal. The audio decoder 1411 outputs the audio signal as a reproduced analog audio signal to, for example, the connectivity module 1321.

The multiplexing section 1412 multiplexes the encoded video stream and the encoded audio stream to generate a multiplexed bit stream. The format of the multiplexed bit stream may be any format. The multiplexing section 1412 may add predetermined header information to the bit stream. The multiplexing section 1412 may convert the format of the stream. For example, the multiplexing section 1412 can generate a transport stream (a bit stream with a transmission format) obtained by multiplexing the encoded video stream and the encoded audio stream. The multiplexing section 1412 can generate file data (data with a recording format) obtained by multiplexing the encoded video stream and the encoded audio stream.

The demultiplexing section 1413 demultiplexes the encoded video stream and the encoded audio stream from the multiplexed bit stream according to an inverse scheme to the multiplexing scheme of the multiplexing section 1412. That is, the demultiplexing section 1413 extracts (or separates) the video stream and the audio stream from the bit stream read from the stream buffer 1414. The demultiplexing section 1413 may convert (inversely convert) the format of the stream. For example, the demultiplexing section 1413 may acquire the transport stream which can be input from the connectivity module 1321 or the broadband modem 1333 via the stream buffer 1414 and convert the transport stream into the video stream and the audio stream. The demultiplexing section 1413 may acquire the file data read from the storage medium by the connectivity module 1321 via the stream buffer 1414 and convert the file data into the video stream and the audio stream.

The stream buffer 1414 buffers the bit stream. For example, the stream buffer 1414 buffers the transport stream input from the multiplexing section 1412 and outputs the transport stream to, for example, the connectivity module 1321 or the broadband modem 1333 at a predetermined timing or in response to a request from the outside. For example, the stream buffer 1414 buffers the file data input from the multiplexing section 1412 and outputs the file data for the purpose of recording to, for example, the connectivity module 1321 at a predetermined timing or in response to a request from the outside. The stream buffer 1414 buffers the transport stream acquired via, for example, the connectivity module 1321 or the broadband modem 1333 and outputs the transport stream to the demultiplexing section 1413 at a predetermined timing or in response to a request from the outside. The stream buffer 1414 buffers the file data read from the storage medium by, for example, the connectivity module 1321 and outputs the file data to the demultiplexing section 1413 at a predetermined timing or in response to a request from the outside.

In the video processor 1332 with such a configuration, the technology of the present disclosure can be used in, for example, the encoding/decoding engine 1407. In this case, the video processor 1332 is a chip or a module to which the technology of the present disclosure is applied.

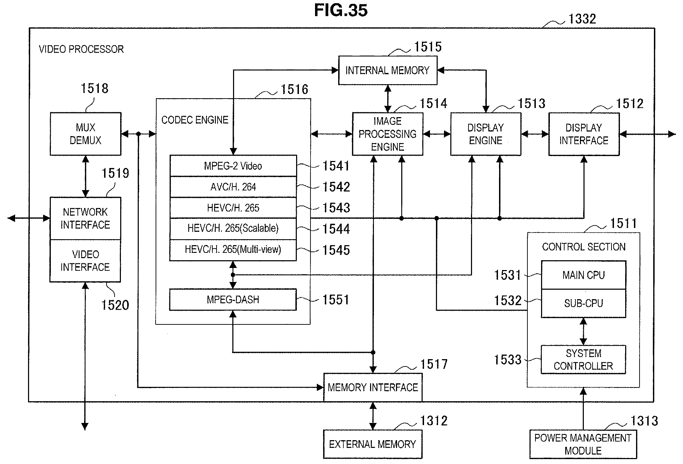

FIG. 35 is a block diagram showing another example of the schematic configuration of the video processor 1332. In the example of FIG. 35, the video processor 1332 has a function of encoding and decoding video data according to a predetermined scheme.

Referring to FIG. 35, the video processor 1332 includes a control section 1511, a display interface 1512, a display engine 1513, an image processing engine 1514, an internal memory 1515, a codec engine 1516, a memory interface 1517, a multiplexing/demultiplexing section 1518, a network interface 1519, and a video interface 1520.

The control section 1511 controls operations of various processing sections in the video processor 1332, such as the display interface 1512, the display engine 1513, the image processing engine 1514, and the codec engine 1516. The control section 1511 includes, for example, a main CPU 1531, a sub-CPU 1532, and a system controller 1533. The main CPU 1531 executes a program to control an operation of each processing section in the video processor 1332. The main CPU 1531 supplies a control signal generated through the execution of the program to each processing section. The sub-CPU 1532 serves an auxiliary role of the main CPU 1531. For example, the sub-CPU 1532 executes a sub-process and a subroutine of the program executed by the main CPU 1531. The system controller 1533 manages the execution of the program by the main CPU 1531 and the sub-CPU 1532.

The display interface 1512 outputs image data to, for example, the connectivity module 1321 under the control of the control section 1511. For example, the display interface 1512 outputs an analog image signal or digital image data converted from digital image data to a display connected to the connectivity module 1321. The display engine 1513 performs format conversion, size conversion, color gamut conversion, and the like on the image data so that the attributes of the image data are suitable for a specification of the display of an output destination under the control of the control section 1511. The image processing engine 1514 performs image processing including a filtering process for the purpose of improvement in image quality on the image data under the control of the control section 1511.

The internal memory 1515 is a memory device that is shared by the display engine 1513, the image processing engine 1514, and the codec engine 1516 and is installed inside the video processor 1332. For example, the internal memory 1515 is used when the image data is input and output between the display engine 1513, the image processing engine 1514, and the codec engine 1516. The internal memory 1515 may be any kind of memory device. For example, the internal memory 1515 may have a relatively small memory size to store image data in units of blocks and relevant parameters. The internal memory 1515 may be, for example, a memory that has a small capacity (for example, relatively small with respect to the external memory 1312) and has a fast response speed, as in a static random access memory (SRAM).

The codec engine 1516 performs an encoding process of encoding the image data to generate the encoded video stream and a decoding process of decoding the image data from the encoded video stream. An image encoding scheme supported by the codec engine 1516 may be any one scheme or a plurality of schemes. In the example of FIG. 35, the codec engine 1516 includes an MPEG-2 video block 1541, an AVC/H.264 block 1542, an HEVC/H.265 block 1543, an HEVC/H.265 (scalable) block 1544, an HEVC/H.265 (multi-view) block 1545, and an MPEG-DASH block 1551. These functional blocks encode and decode the image data according to corresponding image encoding schemes.

The MPEG-DASH block 1551 is a functional block that enables the image data to be transmitted according to the MPEG-DASH scheme. The MPEG-DASH block 1551 controls generation of a stream and transmission of the generated stream in conformity with a standard specification. The encoding and decoding of the image data to be transmitted may be performed by another functional block included in the codec engine 1516.

The memory interface 1517 is an interface that connects the video processor 1332 to the external memory 1312. Data generated by the image processing engine 1514 or the codec engine 1516 is output to the external memory 1312 via the memory interface 1517. Further, data input from the external memory 1312 is supplied to the image processing engine 1514 or the codec engine 1516 via the memory interface 1517.

The multiplexing/demultiplexing section 1518 performs multiplexing and demultiplexing on the encoded video stream and the relevant bit stream. At the time of the multiplexing, the multiplexing/demultiplexing section 1518 may add predetermined header information to the multiplexed stream. At the time of the demultiplexing, the multiplexing/demultiplexing section 1518 may add predetermined header information to individual separated streams. That is, the multiplexing/demultiplexing section 1518 can perform format conversion along with the multiplexing or the demultiplexing. For example, the multiplexing/demultiplexing section 1518 may support conversion and inverse conversion between the plurality of bit streams and the transport stream which is a multiplexed stream with a transmission format and support conversion and inverse conversion between the plurality of bit streams and the file data with a recording format.

The network interface 1519 is, for example, an interface that connects the video processor 1332 to the broadband modem 1333 or the connectivity module 1321. The video interface 1520 is, for example, an interface that connects the video processor 1332 to the connectivity module 1321 or the camera 1322.

In the video processor 1332 with such a configuration, the technology of the present disclosure can be used in, for example, the codec engine 1516. In this case, the video processor 1332 is a chip or a module to which the technology of the present disclosure is applied.

The configuration of the video processor 1332 is not limited to the two examples described above. For example, the video processor 1332 may be realized as one semiconductor chip or may be realized as a plurality of semiconductor chips. The video processor 1332 may be realized as a 3-dimensional lamination LSI formed by laminating a plurality of semiconductors or a combination of a plurality of LSIs.

<7. Conclusion>

The embodiments of the technology of the present disclosure have been described above in detail with reference to FIGS. 1 to 35. In the above-described embodiments, the prediction parameters used when an image of a second layer (for example, an enhancement layer) with a color gamut different from that of a first layer (for example, a base layer) is predicted from an image of the first layer is set for each block included in the image of the second layer. Then, the image of the second layer is predicted from the image of the first layer using the set prediction parameters. Accordingly, the values of different prediction parameters can be used in another region in the image. Thus, it is possible to prevent the accuracy of the inter layer prediction from deteriorating in some regions, and thus to improve the encoding efficiency.

In the above-described embodiments, the prediction parameters used to predict the color gamut include the gain multiplexed to the pixel value of each color component of the first layer and the offset added to the product of the pixel value of the gain. The optimum values of the gain and the offset can differ when the region differs in the image. Accordingly, it is advantageous to variably control the gain and the offset for each block in terms of accomplishment of high accuracy of the inter layer prediction. The present disclosure is not limited to this example, but only the offset may be controlled variably for each block, for example. In some cases, the control of the gain contributes little to improvement in the accuracy of the inter layer prediction depending on the characteristics of the image or a type of color gamut. In such cases, by variably controlling only the offset for each block, it is possible to avoid redundant encoding of information and suppress waste of the processing resources.

In the above-described embodiments, the block may be an LCU. Normally, since the encoding process and the decoding process are implemented to be performed in order for each LCU, the control of the prediction parameters of the color gamut prediction for each LCU is easily suitable for the implementation.

In a certain embodiment, the prediction parameters of a block of interest are subjected to prediction encoding based on adjacent blocks adjacent to the block of interest or setting of collocated blocks in a reference picture. Accordingly, it is possible to reduce the encoding amount necessary for the prediction parameters more than in a scheme of encoding the prediction parameters on all of the blocks without change. When parameter information (reference block information) indicating which reference block is used for the prediction encoding is encoded, it is possible to reduce an error of the prediction encoding and reduce the encoding amount more efficiently by selectively using the reference blocks from the candidates for the plurality of reference blocks in a flexible manner. When difference information indicating the error of the prediction encoding is encoded, the encoding amount can be reduced and the optimum prediction parameters can also be used in each block.

In another embodiment, the prediction parameters of a block of interest are calculated using not the block of interest but the pixel values of an adjacent block and a corresponding block of the first layer corresponding to the adjacent block. In this case, the decoder side can also calculate the prediction parameters with reference to the decoded adjacent block. Therefore, the optimum prediction parameters can be used for each block on both of the encoder and the decoder without encoding additional information. When the reference pixels to be used to calculate the prediction parameters are decimated, it is possible to reduce a load of a prediction parameter calculation process in which relatively many resources are necessary.

The terms "CU," "PU," and "TU" described in the present specification refer to logic units also including the syntaxes relevant to the individual blocks in the HEVC. When only individual blocks of a part of an image are of interest, these terms may be replaced with "coding block (CB)," "prediction block (PB)," and "transform block (TB)," respectively. A CB is formed by dividing a coding tree block (CTB) in a quad-tree form hierarchically. The entire one quad-tree corresponds to the CTB and a logic unit corresponding to the CTB is referred to as a coding tree unit (CTU). The CTB and the CB in the HEVC have roles similar to that of a macro block in H.264/AVC in that the CTB and the CB are processing units of the encoding process. However, the CTB and the CB are different from the macro block in that the sizes thereof are not fixed (the size of the macro block is normally 16x16 pixels). The size of the CTB is selected from 16x16 pixels, 32x32 pixels, and 64x64 pixels and is designated as a parameter in an encoded stream. The size of the CB can be varied according to the depth of the division of the CTB.

The description has been made chiefly for the example in which information on intra prediction and information on color gamut conversion are multiplexed in the header of an encoded stream, and transmitted from the encoding side to the decoding side. However, a technique of transmitting such information is not limited to this example. For example, the information is not multiplexed into an encoded bit stream, but may be transmitted or recorded as separate data associated with the encoded bit stream. The term "associate" means that an image (which may also be a part of an image such as a slice and a block) included in the bit stream may be linked with information corresponding to the image at the time of decoding. That is, the information may be transmitted over a transmission path different from that of an image (or a bit stream). The information may also be recorded in a recording medium different from that of an image (or a bit stream) (or a different recording area in the same recording medium). The information and the image (or the bit stream) may be further associated with each other in given units such as multiple frames, one frame, and a part of a frame.

The preferred embodiments of the present disclosure have been described above with reference to the accompanying drawings, whilst the present disclosure is not limited to the above examples, of course. A person skilled in the art may find various alterations and modifications within the scope of the appended claims, and it should be understood that they will naturally come under the technical scope of the present disclosure.

Additionally, the present technology may also be configured as below.

(1) An image processing device including:

a setting section configured to set a prediction parameter used when an image of a second layer with a color gamut different from a color gamut of a first layer is predicted from an image of the first layer, for each block included in the image of the second layer;
a prediction section configured to generate a predicted image of the second layer from the image of the first layer using the prediction parameter set for each block by the setting section; and
a decoding section configured to decode the image of the second layer using the predicted image generated by the prediction section.

(2) The image processing device according to (1), wherein the prediction parameter includes a gain and an offset by which a pixel value of the first layer is multiplied.

(3) The image processing device according to (1) or (2), wherein the block is a largest coding unit (LCU).

(4) The image processing device according to any one of (1) to (3), wherein the setting section sets the prediction parameter in a first block using a predicted value based on setting of one or more reference blocks which are adjacent blocks adjacent to the first block or are collocated blocks of the first block.

(5) The image processing device according to (4),
wherein the decoding section decodes reference block information indicating which blocks are the one or more reference blocks, and
wherein the setting section acquires the predicted value based on the setting of the one or more reference blocks indicated by the reference block information.

(6) The image processing device according to (5), wherein, when the reference block information indicates that no block is referred to, the setting section sets the prediction parameter in the first block, the prediction parameter being designated by the parameter information decoded by the decoding section.

(7) The image processing device according to any one of (4) to (6), wherein the setting section sets the prediction parameter in the first block, the prediction parameter corresponding to a sum of the predicted value and a difference value decoded by the decoding section.

(8) The image processing device according to any one of (1) to (3), wherein the setting section sets the prediction parameter in the first block, the prediction parameter being calculated using pixel values of one or more adjacent blocks adjacent to the first block and one or more corresponding blocks of the first layer corresponding to the one or more adjacent blocks.

(9) The image processing device according to (8), wherein the setting section decimates a part of pixels of the one or more adjacent blocks and the one or more corresponding blocks and calculates the prediction parameter using pixel values of remaining pixels.

(10) The image processing device according to (8) or (9), wherein the setting section sets a default value as the prediction parameter in a second block having no available adjacent block.

(11) An image processing method including:

setting a prediction parameter used when an image of a second layer with a color gamut different from a color gamut of a first layer is predicted from an image of the first layer, for each block included in the image of the second layer;

generating a predicted image of the second layer from the image of the first layer using the prediction parameter set for each block; and

decoding the image of the second layer using the generated predicted image.

(12) An image processing device including:

a setting section configured to set a prediction parameter used when an image of a second layer with a color gamut different from a color gamut of a first layer is predicted from an image of the first layer, for each block included in the image of the second layer;

a prediction section configured to generate a predicted image of the second layer from the image of the first layer using the prediction parameter set for each block by the setting section; and

an encoding section configured to encode the image of the second layer using the predicted image generated by the prediction section.

(13) The image processing device according to (12), wherein the prediction parameter includes a gain and an offset by which a pixel value of the first layer is multiplied.

(14) The image processing device according to (12) or (13), wherein the block is a largest coding unit (LCU).

(15) The image processing device according to any one of (12) to (14), wherein the encoding section encodes the prediction parameter to be set in a first block using a predicted value based on setting of one or more reference blocks which are adjacent blocks adjacent to the first block or are collocated blocks of the first block.

(16) The image processing device according to (15), wherein the encoding section further encodes reference block information indicating which blocks are the one or more reference blocks.

(17) The image processing device according to any one of (12) to (14), wherein the setting section sets the prediction parameter in the first block, the prediction parameter being calculated using pixel values of one or more adjacent blocks adjacent to the first block and one or more corresponding blocks of the first layer corresponding to the one or more adjacent blocks.

(18) The image processing device according to (17), wherein the setting section decimates a part of pixels of the one or more adjacent blocks and the one or more corresponding blocks and calculates the prediction parameter using pixel values of remaining pixels.

(19) The image processing device according to (17) or (18), wherein the setting section sets a default value as the prediction parameter in a second block having no available adjacent block.

(20) An image processing method including:

setting a prediction parameter used when an image of a second layer with a color gamut different from a color gamut of a first layer is predicted from an image of the first layer, for each block included in the image of the second layer;

generating a predicted image of the second layer from the image of the first layer using the prediction parameter set for each block; and

encoding the image of the second layer using the generated predicted image.

Additionally, the present technology may also be configured as below.

(1) An image processing device including:

a setting section configured to set a prediction parameter used when an image of a second layer with a color gamut different from a color gamut of a first layer is predicted from an image of the first layer, for each block included in the image of the second layer;

a prediction section configured to generate a predicted image of the second layer from the image of the first layer using the prediction parameter set for each block by the setting section; and

a decoding section configured to decode the image of the second layer using the predicted image generated by the prediction section,

wherein the prediction parameters include an offset added to a product of a pixel value of the first layer and a gain, and

wherein the setting section sets the gain as a fixed gain throughout a plurality of blocks and sets the offset as the variable offset for each block.

(2) An image processing device including:

a setting section configured to set a prediction parameter used when an image of a second layer with a color gamut different from a color gamut of a first layer is predicted from an image of the first layer, for each block included in the image of the second layer;

a prediction section configured to generate a predicted image of the second layer from the image of the first layer using the prediction parameter set for each block by the setting section; and

an encoding section configured to encode the image of the second layer using the predicted image generated by the prediction section,

wherein the prediction parameters include an offset added to a product of a pixel value of the first layer and a gain, and

wherein the setting section sets the gain as a fixed gain throughout a plurality of blocks and sets the offset as the variable offset for each block.

Reference Signs List

| | |
|---|---|
| 10, 10v | image encoding device (image processing device) |
| 16 | lossless encoding section |
| 42 | prediction section |
| 43, 48 | parameter setting section |
| 60, 60v | image decoding device (image processing device) |
| 62 | lossless decoding section |
| 92 | prediction section |
| 93, 98 | parameter setting section |

**Claims**

1. An image processing device comprising:

    a setting section configured to set a prediction parameter used when an image of a second layer with a color gamut different from a color gamut of a first layer is predicted from an image of the first layer, for each block included in the image of the second layer;
    a prediction section configured to generate a predicted image of the second layer from the image of the first layer using the prediction parameter set for each block by the setting section; and
    a decoding section configured to decode the image of the second layer using the predicted image generated by the prediction section.

2. The image processing device according to claim 1, wherein the prediction parameter includes a gain and an offset by which a pixel value of the first layer is multiplied.

3. The image processing device according to claim 1, wherein the block is a largest coding unit (LCU).

4. The image processing device according to claim 1, wherein the setting section sets the prediction parameter in a first block using a predicted value based on setting of one or more reference blocks which are adjacent blocks adjacent to the first block or are collocated blocks of the first block.

5. The image processing device according to claim 4, wherein the decoding section decodes reference block information indicating which blocks are the one or more reference blocks, and
    wherein the setting section acquires the predicted value based on the setting of the one or more reference blocks indicated by the reference block information.

6. The image processing device according to claim 5, wherein, when the reference block information indicates that no block is referred to, the setting section sets the prediction parameter in the first block, the prediction parameter being designated by the parameter information decoded by the decoding section.

7. The image processing device according to claim 4, wherein the setting section sets the prediction parameter in the first block, the prediction parameter corresponding to a sum of the predicted value and a difference value decoded by the decoding section.

8. The image processing device according to claim 1, wherein the setting section sets the prediction parameter in the first block, the prediction parameter being calculated using pixel values of one or more adjacent blocks adjacent to the first block and one or more corresponding blocks of the first layer corresponding to the one or more adjacent blocks.

9. The image processing device according to claim 8, wherein the setting section decimates a part of pixels of the one or more adjacent blocks and the one or more corresponding blocks and calculates the prediction parameter using pixel values of remaining pixels.

10. The image processing device according to claim 8, wherein the setting section sets a default value as the prediction parameter in a second block having no available adjacent block.

11. An image processing method comprising:

setting a prediction parameter used when an image of a second layer with a color gamut different from a color gamut of a first layer is predicted from an image of the first layer, for each block included in the image of the second layer;
generating a predicted image of the second layer from the image of the first layer using the prediction parameter set for each block; and
decoding the image of the second layer using the generated predicted image.

12. An image processing device comprising:

a setting section configured to set a prediction parameter used when an image of a second layer with a color gamut different from a color gamut of a first layer is predicted from an image of the first layer, for each block included in the image of the second layer;
a prediction section configured to generate a predicted image of the second layer from the image of the first layer using the prediction parameter set for each block by the setting section; and
an encoding section configured to encode the image of the second layer using the predicted image generated by the prediction section.

13. The image processing device according to claim 12, wherein the prediction parameter includes a gain and an offset by which a pixel value of the first layer is multiplied.

14. The image processing device according to claim 12, wherein the block is a largest coding unit (LCU).

15. The image processing device according to claim 12, wherein the encoding section encodes the prediction parameter to be set in a first block using a predicted value based on setting of one or more reference blocks which are adjacent blocks adjacent to the first block or are collocated blocks of the first block.

16. The image processing device according to claim 15, wherein the encoding section further encodes reference block information indicating which blocks are the one or more reference blocks.

17. The image processing device according to claim 12, wherein the setting section sets the prediction parameter in the first block, the prediction parameter being calculated using pixel values of one or more adjacent blocks adjacent to the first block and one or more corresponding blocks of the first layer corresponding to the one or more adjacent blocks.

18. The image processing device according to claim 17, wherein the setting section decimates a part of pixels of the one or more adjacent blocks and the one or more corresponding blocks and calculates the prediction parameter using pixel values of remaining pixels.

19. The image processing device according to claim 17, wherein the setting section sets a default value as the prediction parameter in a second block having no available adjacent block.

20. An image processing method comprising:

setting a prediction parameter used when an image of a second layer with a color gamut different from a color gamut of a first layer is predicted from an image of the first layer, for each block included in the image of the second layer;

generating a predicted image of the second layer from the image of the first layer using the prediction parameter set for each block; and

encoding the image of the second layer using the generated predicted image.

**Amended claims under Art. 19.1 PCT**

**1.** currently amended) An image processing device comprising:

a setting section configured to set a prediction parameter used when an image of a second layer with a color gamut different from a color gamut of a first layer is predicted from an image of the first layer, for each block included in the image of the second layer;

a prediction section configured to generate a predicted image of the second layer from the image of the first layer using the prediction parameter set for each block by the setting section; and

a decoding section configured to decode the image of the second layer using the predicted image generated by the prediction section,

wherein the setting section sets the prediction parameter in the first block, the prediction parameter being calculated using pixel values of one or more adjacent blocks adjacent to the first block and one or more corresponding blocks of the first layer corresponding to the one or more adjacent blocks.

**2.** The image processing device according to claim 1, wherein the prediction parameter includes a gain and an offset by which a pixel value of the first layer is multiplied.

**3.** The image processing device according to claim 1, wherein the block is a largest coding unit (LCU).

**4.** (canceled)

**5.** (canceled)

**6.** (canceled)

**7.** (canceled)

**8.** (canceled)

**9.** currently amended) The image processing device according to claim 1, wherein the setting section decimates a part of pixels of the one or more adjacent blocks and the one or more corresponding blocks and calculates the prediction parameter using pixel values of remaining pixels.

**10.** currently amended) The image processing device according to claim 1, wherein the setting section sets a default value as the prediction parameter in a second block having no available adjacent block.

**11.** currently amended) An image processing method comprising:

setting a prediction parameter used when an image of a second layer with a color gamut different from a color gamut of a first layer is predicted from an image of the first layer, for each block included in the image of the second layer;

generating a predicted image of the second layer from the image of the first layer using the prediction parameter set for each block; and

decoding the image of the second layer using the generated predicted image,

wherein the prediction parameter calculated using pixel values of one or more adjacent blocks adjacent to the first block and one or more corresponding blocks of the first layer corresponding to the one or more adjacent blocks is set in the first block.

**12.** currently amended) An image processing device comprising:

a setting section configured to set a prediction parameter used when an image of a second layer with a color gamut different from a color gamut of a first layer is predicted from an image of the first layer, for each block included in the image of the second layer;

a prediction section configured to generate a predicted image of the second layer from the image of the first layer using the prediction parameter set for each block by the setting section; and

an encoding section configured to encode the image of the second layer using the predicted image generated by the prediction section,

wherein the setting section sets the prediction parameter in the first block, the prediction parameter being calculated using pixel values of one or more adjacent blocks adjacent to the first block and one or more corresponding blocks of the first layer corresponding to the one or more adjacent blocks.

**13.** The image processing device according to claim 12, wherein the prediction parameter includes a gain and an offset by which a pixel value of the first layer is multiplied.

**14.** The image processing device according to claim 12, wherein the block is a largest coding unit (LCU).

**15.** (canceled)

**16.** (canceled)

**17.** (canceled)

**18.** currently amended) The image processing device according to claim 12, wherein the setting section decimates a part of pixels of the one or more adjacent blocks and the one or more corresponding blocks and calculates the prediction parameter using pixel values of remaining pixels.

**19.** currently amended) The image processing device according to claim 12, wherein the setting section sets a default value as the prediction parameter in a second block having no available adjacent block.

**20.** currently amended) An image processing method comprising:

setting a prediction parameter used when an image of a second layer with a color gamut different from a color gamut of a first layer is predicted from an image of the first layer, for each block included in the image of the second layer;

generating a predicted image of the second layer from the image of the first layer using the prediction parameter set for each block; and

encoding the image of the second layer using the generated predicted image,

wherein the prediction parameter calculated using pixel values of one or more adjacent blocks adjacent to the first block and one or more corresponding blocks of the first layer corresponding to the one or more adjacent blocks is set in the first block.

# FIG.1

L3  L2  L1

B3  B2  B1

Enhancement Layer 2    Enhancement Layer    Base Layer

RESOLUTION RATIO TO    4 : 1    2 : 1
Base Layer

Upper Layer    Lower Layer

# FIG.2

# FIG.3A

| PREDICTION MODE (color_prediction_model) | REMARK |
|---|---|
| 0 | BIT SHIFT |
| 1 | FIXED GAIN AND OFFSET |
| 2 | ADAPTIVE GAIN AND OFFSET |

# FIG.3B

```
01 |    pps_extension_flag
02 |    if( pps_extension_flag ) {
03 |        use_color_prediction
04 |        if(use_color_prediction) {
05 |            color_pred_data ( )
06 |        }
07 |    }
08 |    rbsp_trailing_bits( )
```

<----- PPS EXTENSION FLAG

<----- FUNCTION OF SYNTAX FOR COLOR GAMUT SCALABILITY

# FIG.3C

```
01 |    color_prediction_model
02 |    if(color_prediction_model==2) {
03 |        numFractionBits
04 |        for( I = 0; I < 3; i++ ){
05 |            color_predictor_gain [I]
06 |            color_predictor_offset [I]
07 |        }
08 |    }
```

<----- PREDICTION MODE

<----- GAIN (DENOMINATOR)

<----- GAIN (NUMERATOR)

<----- OFFSET

# FIG.4

10

Base Layer IMAGE →

BL ENCODING SECTION — 1a

ENCODED STREAM (Base Layer) →

COMMON MEMORY — 2

MULTIPLEXING SECTION — 3

→ MULTIPLEXED STREAM (Multi-layer)

Enhancement Layer IMAGE →

EL ENCODING SECTION — 1b

ENCODED STREAM (Enhancement Layer) →

# FIG.5

60

MULTIPLEXED STREAM
(Multi-layer)

5
DEMULTIPLEXING
SECTION

ENCODED STREAM
(Base Layer)

6a
BL DECODING
SECTION

Base Layer IMAGE

7
COMMON
MEMORY

EL DECODING
SECTION

ENCODED STREAM
(Enhancement Layer)

6b

Enhancement Layer IMAGE

**FIG.6**

**FIG.7**

## FIG.8A

merge_left_flag = "1"

(merge_top_flag = "0")

## FIG.8B

(merge_left_flag = "0")

merge_top_flag = "1"

## FIG.8C

merge_left_flag = "0"

merge_top_flag = "0"

numFractionBits
for( I = 0; I < 3; i++ ){
    color_predictor_gain [I]
    color_predictor_offset [I]
}

## FIG.8D

merge_left_flag = "0"

merge_top_flag = "0"

merge_col_flag = "1"

**FIG.9**

# FIG.10A

⊘ : Reference Pixel

# FIG.10B

⊘ : Reference Pixel

◯ : Decimated Reference Pixel

# FIG.11

Im4e

B40e      B41e      B42e

$G_{40e} / O_{40e}$

$G_{42e} / O_{42e}$

B43e                     B45e

B47e

B46e                     B48e

$G_{46e} / O_{46e}$

$G_{48e} / O_{48e}$

# FIG.12

```
         ┌─────────┐
         │  START  │
         └─────────┘
              │
              │        ∼S11
              ▼
┌──────────────────────────────┐
│   PERFORM ENCODING PROCESS    │
│       FOR BASE LAYER          │
└──────────────────────────────┘
              │
              │        ∼S12
              ▼
┌──────────────────────────────┐
│   BUFFER IMAGE OF BASE LAYER  │
└──────────────────────────────┘
              │
              │        ∼S13
              ▼
┌──────────────────────────────┐
│   PERFORM ENCODING PROCESS    │
│    FOR ENHANCEMENT LAYER      │
└──────────────────────────────┘
              │
              │        ∼S14
              ▼
┌──────────────────────────────┐
│   GENERATE MULTIPLEXED STREAM │
└──────────────────────────────┘
              │
              ▼
         ┌─────────┐
         │   END   │
         └─────────┘
```

# FIG.13

```
                    ( START )
                        │
                        │   ~S20
        ┌───────────────▼───────────────┐
        │    PERFORM UP-SAMPLING         │
        └───────────────┬───────────────┘
                        │   ~S21
        ┌───────────────▼───────────────┐
        │  IDENTIFY CORRESPONDING BLOCK  │
        │ OF BL CORRESPONDING TO BLOCK   │
        │         OF INTEREST            │
        └───────────────┬───────────────┘
                        │   ~S22
        ┌───────────────▼───────────────┐
        │   GENERATE PREDICTED IMAGE     │
        │       IN BIT SHIFT MODE        │
        └───────────────┬───────────────┘
                        │   ~S23
        ┌───────────────▼───────────────┐
        │   GENERATE PREDICTED IMAGE     │
        │    IN FIXED PARAMETER MODE     │
        └───────────────┬───────────────┘
                        │   ~S24
        ┌───────────────▼───────────────┐
        │  SET PREDICTION PARAMETER      │
        │ CALCULATED USING IMAGES OF     │
        │   BLOCK OF INTEREST AND        │
        │ CORRESPONDING BLOCK OF BL IN   │
        │      BLOCK OF INTEREST         │
        └───────────────┬───────────────┘
                        │   ~S29
        ┌───────────────▼───────────────┐
        │  GENERATE PREDICTED IMAGE IN   │
        │    ADAPTIVE PARAMETER MODE     │
        └───────────────┬───────────────┘
                        │   ~S30
        ┌───────────────▼───────────────┐
        ║     PERFORM PARAMETER          ║
        ║  INFORMATION GENERATION        ║
        ║         PROCESS                ║
        └───────────────┬───────────────┘
```

```
                        │   ~S41
        ┌───────────────▼───────────────┐
        │ DETERMINE OPTIMUM COLOR GAMUT  │
        │   PREDICTION MODE BASED ON     │
        │     COMPARISON OF COSTS        │
        └───────────────┬───────────────┘
                        │   ~S43
        ┌───────────────▼───────────────┐
        │    STORE PREDICTED IMAGE       │
        │  SUBJECTED TO COLOR GAMUT      │
        │    CONVERSION IN MEMORY        │
        └───────────────┬───────────────┘
                        │   ~S45
        ┌───────────────▼───────────────┐
        │ ENCODE INFORMATION REGARDING   │
        │    COLOR GAMUT CONVERSION      │
        └───────────────┬───────────────┘
                        │   ~S47
                   ◇────▼────◇        Yes
                  < IS THERE    >─────────
                  < SUBSEQUENT  >
                  < BLOCK OF    >
                  < INTEREST?   >
                   ◇────┬────◇
                        │ No
                    ( END )
```

# FIG.14

START

S31
SELECT REFERENCE BLOCK FOR PREDICTION OF PREDICTION PARAMETER

S32
ARE ONE OR MORE REFERENCE BLOCKS SELECTED?

No

Yes

S33
ACQUIRE PREDICTED VALUE FOR BLOCK OF INTEREST BASED ON PREDICTION PARAMETER SET IN SELECTED REFERENCE BLOCK

S37
GENERATE REFERENCE BLOCK INFORMATION INDICATING THAT VALUE OF PREDICTION PARAMETER IS ENCODED

S34
CALCULATE DIFFERENCE VALUE BETWEEN VALUE OF PREDICTION PARAMETER OF BLOCK OF INTEREST AND PREDICTED VALUE

S38
GENERATE INFORMATION DESIGNATING PREDICTION PARAMETER OF BLOCK OF INTEREST

S35
GENERATE REFERENCE BLOCK INFORMATION IDENTIFYING REFERENCE BLOCK

S36
GENERATE DIFFERENCE INFORMATION SPECIFYING CALCULATED DIFFERENCE VALUE

END

START

~ S20

PERFORM UP-SAMPLING

~ S21

IDENTIFY REFERENCE BLOCK OF BL
CORRESPONDING TO BLOCK OF
INTEREST

~ S22

GENERATE PREDICTED IMAGE IN
BIT SHIFT MODE

~ S23

GENERATE PREDICTED IMAGE IN
FIXED PARAMETER MODE

~ S25

IS THERE AVAILABLE
ADJACENT BLOCK?

No

Yes

~ S26

SELECT REFERENCE PIXELS OF EL
AND BL (DECIMATE AS NEEDED)

~ S27

SET PREDICTION PARAMETER
CALCULATED USING PIXEL VALUES
OF REFERENCE PIXELS IN BLOCK
OF INTEREST

~ S28

SET DEFAULT PREDICTION
PARAMETER IN BLOCK OF INTEREST

~ S29

GENERATE PREDICTED IMAGE IN
ADAPTIVE PARAMETER MODE

~ S41

DETERMINE OPTIMUM COLOR GAMUT
PREDICTION MODE BASED ON
COMPARISON OF COSTS

~ S43

STORE PREDICTED IMAGE
SUBJECTED TO COLOR GAMUT
CONVERSION IN MEMORY

~ S45

ENCODE INFORMATION REGARDING
COLOR GAMUT CONVERSION

~ S47

IS THERE SUBSEQUENT
BLOCK OF INTEREST?

Yes

No

END

## FIG.16

6b

# FIG.17

62

90

PREDICTION MODE
INFORMATION

91                    92

BL IMAGE

UP-SAMPLING
SECTION

PREDICTION
SECTION

PREDICTED IMAGE

7                                                                              69

PREDICTION
PARAMETER

97a                    98                          97b

BL REFERENCE
BUFFER

PARAMETER
SETTING
SECTION

EL REFERENCE
BUFFER

62

EL IMAGE

69

# FIG.19

START

$\sim$ S60

DEMULTIPLEX MULTIPLEXED STREAM

$\sim$ S61

PERFORM DECODING PROCESS FOR
BASE LAYER

$\sim$ S62

BUFFER IMAGE OF BASE LAYER

$\sim$ S63

PERFORM DECODING PROCESS FOR
ENHANCEMENT LAYER

END

# FIG.20

START

S70
PERFORM UP-SAMPLING

S71
IDENTIFY CORRESPONDING BLOCK
OF BL CORRESPONDING TO BLOCK
OF INTEREST

S72
ACQUIRE INFORMATION REGARDING
COLOR GAMUT CONVERSION IN
REGARD TO BLOCK OF INTEREST

S73
BIT SHIFT MODE? — Yes

No

S74
GENERATE PREDICTED IMAGE
IN BIT SHIFT MODE

S75
FIXED PARAMETER MODE?

No

Yes

S76
SET FIXED PREDICTION PARAMETER
IN BLOCK OF INTEREST

S93
GENERATE PREDICTED IMAGE
OF BLOCK OF INTEREST USING
SET PREDICTION PARAMETER

S80
PERFORM PREDICTION
PARAMETER GENERATION
PROCESS

S94
STORE PREDICTED IMAGE
SUBJECTED TO COLOR GAMUT
CONVERSION IN MEMORY

S90
SET GENERATED PREDICTION
PARAMETER IN BLOCK OF INTEREST

S95
IS THERE SUBSEQUENT — Yes
BLOCK OF INTEREST?

No

END

# FIG.21

START

S81

ARE ONE OR MORE
REFERENCE BLOCKS
DESIGNATED BY REFERENCE
BLOCK INFORMATION?

No

Yes

S83

DECIDE PREDICTION VALUE FOR BLOCK
OF INTEREST BASED ON PREDICTION
PARAMETER SET IN REFERENCE BLOCK

S84

ACQUIRE DIFFERENCE INFORMATION
IN REGARD TO BLOCK OF INTEREST

S87

DECIDE VALUE OF PREDICTION
PARAMETER TO BE SET IN BLOCK
OF INTEREST FROM PARAMETER
INFORMATION

S85

CALCULATE PREDICTION PARAMETER
WHICH IS SUM OF PREDICTED VALUE
AND DIFFERENCE VALUE

END

# FIG.22

START

S70

PERFORM UP-SAMPLING

S71

IDENTIFY REFERENCE BLOCK OF BL CORRESPONDING TO BLOCK OF INTEREST

S72

ACQUIRE INFORMATION REGARDING COLOR GAMUT CONVERSION IN REGARD TO BLOCK OF INTEREST

S73

BIT SHIFT MODE?

No

Yes

S74

GENERATE PREDICTED IMAGE IN BIT SHIFT MODE

S75

FIXED PARAMETER MODE?

No

Yes

S76

SET FIXED PREDICTION PARAMETER IN BLOCK OF INTEREST

S77

IS THERE AVAILABLE ADJACENT BLOCK?

No

Yes

S78

SELECT REFERENCE PIXELS OF EL AND BL (DECIMATE AS NEEDED)

S79

SET PREDICTION PARAMETER CALCULATED USING PIXEL VALUES OF REFERENCE PIXELS IN BLOCK OF INTEREST

S91

SET DEFAULT PREDICTION PARAMETER IN BLOCK OF INTEREST

S93

GENERATE PREDICTED IMAGE OF BLOCK OF INTEREST USING SET PREDICTION PARAMETER

S94

STORE PREDICTED IMAGE SUBJECTED TO COLOR GAMUT CONVERSION IN MEMORY

S95

IS THERE SUBSEQUENT BLOCK OF INTEREST?

Yes

No

END

FIG.23

900

**FIG.24**

# FIG.25

940

944

HDD

945

DISK DRIVE

941

TUNER

946

SELECTOR

947

DECODER

948

OSD

942

EXTERNAL I/F

943

ENCODER

949

CONTROL SECTION

950

USER I/F

**FIG.26**

960

961 | 962 IMAGE-CAPTURING SECTION | 963 SIGNAL PROCESSING SECTION | 964 IMAGE PROCESSING SECTION | 965 DISPLAY SECTION

967 MEMORY | 969 OSD

972

966 EXTERNAL I/F | 970 CONTROL SECTION | 971 USER I/F

968 MEDIA DRIVE

**FIG.27**

**FIG.28**

1100

1101

1112

1122

EL

1102

BROADCASTING
STATION

1111

TERRESTRIAL
BROADCASTING

1121

BL

1122

EL

1121

BL

**FIG.29**

**FIG.30**

# FIG.31

10v

Base View
IMAGE → FIRST LAYER ENCODING SECTION `1c`

ENCODED STREAM (Base View)

COMMON MEMORY `2`

Non-base View
IMAGE → SECOND LAYER ENCODING SECTION `1d`

ENCODED STREAM (Non-base View)

MULTIPLEXING SECTION `3`

MULTIPLEXED STREAM (Multi-layer)

# FIG.32

60v

MULTIPLEXED STREAM
(Multi-layer)

DEMULTIPLEXING
SECTION

5

ENCODED STREAM
(Base View)

FIRST LAYER
DECODING
SECTION

6c

Base View
IMAGE

COMMON
MEMORY

7

SECOND LAYER
DECODING
SECTION

6d

ENCODED STREAM
(Non-base View)

Non-base View
IMAGE

**FIG.33**

## FIG.34

**FIG.35**

**INTERNATIONAL SEARCH REPORT**

International application No.

PCT/JP2014/064824

A.   CLASSIFICATION OF SUBJECT MATTER
*H04N19/30(2014.01)i*

According to International Patent Classification (IPC) or to both national classification and IPC

B.   FIELDS SEARCHED

Minimum documentation searched (classification system followed by classification symbols)
H04N19/00-19/98

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| X<br>Y | JP 2011-509536 A  (Sharp Corp.),<br>24 March 2011 (24.03.2011),<br>paragraphs [0010] to [0060], [0084] to [0085];<br>fig. 1A, 1B, 2 to 9<br>& WO 2009/087952 A1    & US 2009/0175338 A1 | 1-7,11-16,20<br>8-10,17-19 |
| X<br>Y | JP 2009-010943 A  (Mitsubishi Electric Research<br>Laboratories, Inc.),<br>15 January 2009 (15.01.2009),<br>abstract; paragraphs [0019] to [0038]; fig. 1<br>to 6<br>& US 2009/0003457 A1    & EP 2009921 A2<br>& CN 101335894 A | 1-7,11-16,20<br>8-10,17-19 |

| ☒ | Further documents are listed in the continuation of Box C. | ☐ | See patent family annex. |
|---|---|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 25 July, 2014 (25.07.14) | 12 August, 2014 (12.08.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2014/064824

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2010-522494 A (LG Electronics Inc.), 01 July 2010 (01.07.2010), paragraphs [0041], [0067], [0074] to [0075], [0080], [0083]<br>& WO 2008/117963 A1 & EP 2130374 A1<br>& US 2010/0098157 A1 & CN 101641954 A<br>& KR 10-2010-0014552 A | 8-10,17-19 |
| Y | JP 2011-188129 A (Nippon Hoso Kyokai), 22 September 2011 (22.09.2011), paragraphs [0040], [0052]; fig. 2, 5 (Family: none) | 9,18 |
| A | Louis Kerofsky (et al.), "Color Gamut Scalable Video Coding: New Results", Joint Collaborative Team on Video Coding (JCT-VC) of ITU-T SG16 WP3 and ISO/IEC JTC1/SC29/WG11 JCTVC-L0334, ITU-T, 2013.01.23, p.1-18 | 1-20 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BENJAMIN BROSS ; WOO-JIN HAN ; GARY J. SULLIVAN ; JENS-RAINER OHM ; GARY J. SULLIVAN ; YE-KUI WANG ; THOMAS WIEGAND.** High Efficiency Video Coding (HEVC) text specification draft 10 (for FDIS & Consent). *JCTVC-L1003 v4,* 14 January 2013

- **JIANLE CHEN.** Description of scalable video coding technology proposal by Qualcomm (configuration 2. *JCTVC-K0036,* 10 October 2012
- **LOUIS KEROFSKY.** Color Gamut Scalable Video Coding: New Results. *JCTVC-L0334,* 14 January 2013